# EUROPÄISCHE PATENTSCHRIFT

(11) **EP 4 357 108 B1**
(45) Veröffentlichungstag und Bekanntmachung des Hinweises auf die Patenterteilung: **15.04.2026**
(21) Anmeldenummer: 23202710.2
(22) Anmeldetag: 10.10.2023
(51) Int. Cl.: B29C 64/118, B29C 64/321, B29C 64/393, B33Y 10/00, B33Y 30/00, B33Y 40/00, B33Y 50/02

(54) **VORRICHTUNG UND VERFAHREN ZUM WECHSELN EINER FILAMENTSPULE WÄHREND DES DRUCKENS EINES DREIDIMENSIONALEN OBJEKTS**
APPARATUS AND METHOD FOR CHANGING FILAMENT SPOOL DURING PRINTING OF THREE-DIMENSIONAL OBJECT
APPAREIL ET PROCÉDÉ DE CHANGEMENT DE BOBINE DE FILAMENT PENDANT L'IMPRESSION D'UN OBJET TRIDIMENSIONNEL

(30) Priorität: 17.10.2022 DE 102022127079
(43) Veröffentlichungstag der Anmeldung: 24.04.2024
(73) Patentinhaber: InnovatiQ GmbH + Co KG, 85622 Feldkirchen (DE)
(72) Erfinder: KARAALI, Yildiray, 82031 Grünwald (DE)
(74) Vertreter: Viering, Jentschura & Partner mbB Patent- und Rechtsanwälte

(56) Entgegenhaltungen:
- DE-T2- 60 107 569
- US-A1- 2018 015 655
- US-A1- 2018 015 668
- US-A1- 2020 269 507

## Beschreibung

Verschiedene Ausführungsbeispiele betreffen allgemein eine Vorrichtung und ein Verfahren zum Wechseln einer Filamentspule während des Druckens eines dreidimensionalen Objektes.

Das Drucken kann ein Extrusion-basiertes additives Herstellungsverfahren sein, wie beispielsweise ein Schmelzschichtverfahren (z.B. Schmelz-Filament-Herstellung (engl.: "fused filament fabrication", FFT) bzw. Schmelz-Abscheidungs-Modellierung (engl.: "fused deposition modeling", FDM).

Bei Schmelzschichtverfahren zum Drucken dreidimensionaler Objekte (d.h. 3D-Drucken) wird ein Filament von einer Filamentspule abgewickelt und in einem Druckkopf verflüssigt. Bei herkömmlichen Schmelzschichtverfahren wird die Filamentspule mit einer anderen Filamentspule ersetzt, sobald sich das auf der Filamentspule verbleibende Filamentmaterial dem Ende neigt. Dies kann dazu führen, dass, wenn der Druckkopf während des Wechsels der Filamentspule (in manchen Aspekten auch als Spulenwechsel bezeichnet) gerade einen Oberflächenbereich des dreidimensionalen Objekts druckt, Oberflächendefekte, wie beispielsweise eine Verformung, eine Einkerbung, ein Versatz, etc., entstehen können.

Es kann erwünscht und/oder erforderlich sein, solche (z.B. sichtbaren) Oberflächendefekte zu verhindern. Verschiedene Drucksysteme versuchen beispielsweise den Druckkopf während des Spulenwechsels so genau zu steuern, dass solche Oberflächendefekte verhindert werden. Allerdings führt dies nur zu einer verringerten Anzahl der Oberflächendefekte und verhindert diese nicht vollständig. Auch führen solche Drucksysteme aufgrund der erforderlichen Genauigkeit des Druckkopfes zu deutlich erhöhten Kosten.

DE 601 07 569 T2 beschreibt eine dreidimensionale Modelliermaschine auf Extrusionsbasis, bei der eine Steuerung während einer Modellierung die Menge des Filaments, die in einer Kassette verbleibt, erfasst. Wenn in der Kassette das Filament ausgeht, schaltet die Modelliermaschine automatisch auf eine Ersatzkassette ohne Eingriff eines Operators um.

Das Dokument "Marlin Documentation - M413 M600 - Marlin Firmware - GitHub" offenbart zwei Befehle eines Befehlssatzes, mit denen es möglich ist, einen Druckkopf an eine bestimmte Position zu bewegen.

US 2022/0288859 A1 beschreibt ein Filament-Überwachungssystem in einem 3D-Drucker.

US 2018/015655 A1 ein Verfahren zum Drucken eines dreidimensionalen Objekts mittels eines Filaments. Wenn das Filament endet, wird der Druckvorgang an der Position, an der ermittelt wird, dass das Filament endet, pausiert, und es wird ein Wechsel der Filamentspulen durchgeführt. Nach dem Wechsel wird der Druckvorgang fortgeführt.

US 2020/0269507 A1 beschreibt ein Verfahren und eine Vorrichtung zum Filament-Wechsel, ohne den Druckvorgang des Druckens eines dreidimensionalen Objekts zu unterbrechen.

US 2018/0015668 A1 beschreibt ein Verfahren und eine Vorrichtung zum dreidimensionalen Drucken.

Der Erfindung liegt die Aufgabe zu Grunde, eine Vorrichtung und ein Verfahren bereitgestellt, welche es ermöglichen, Oberflächendefekte aufgrund des Wechselns von Filamentspulen während des 3D-Druckens zu verringern.

Die Aufgabe wird durch den Gegenstand der unabhängigen Patentansprüche 1 und 13 gelöst.

Gemäß verschiedenen Ausführungsformen werden eine Vorrichtung und ein Verfahren bereitgestellt, welche es ermöglichen, Oberflächendefekte aufgrund des Wechselns von Filamentspulen während des 3D-Druckens zu verringern (z.B. zu verhindern). Dies wird ermöglicht, indem der Druckkopf zum Wechseln der Filamentspule in einen Nicht-Sichtbar-Druckbereich (z.B. einem Druckbereich zum Drucken einer Füllstruktur (engl.: "infill")) des dreidimensionalen Objekts bewegt wird und der Druckvorgang dort pausiert wird oder, wenn der Druckkopf bereits in einem Nicht-Sichtbar-Druckbereich des dreidimensionalen Objekts ist, der Druckvorgang dort pausiert wird.

Hierbei kann während des 3D-Druckens erfasst werden, ob sich ein verbleibendes Filament dem Ende neigt. Hierzu kann ermittelt werden, ob das verbleibende Filaments kleiner als oder gleich einem vordefinierten Filament-Schwellenwert ist. In einem Beispiel kann ein Ende des Filaments (z.B. mittels einer Lichtschranke, eines Tasters, etc.) erfasst werden. Zusätzlich oder alternativ kann permanent (z.B. kontinuierlich) eine Menge (z.B. Länge) des von der Filamentspule abgewickelten Filaments und/oder eine Menge (z.B. Länge) des verbleibenden Filaments erfasst oder ermittelt werden. Gemäß verschiedenen Ausführungsformen kann auf eine andere Art und Weise ermittelt werden, ob sich das verbleibende Filament dem Ende neigt. Zum Beispiel kann die Filamentspule oder das Filament eine (z.B. optische und/oder mechanische) Markierung aufweisen, welche angibt, dass das verbleibende Filament gleich dem vordefinierten Filament-Schwellenwert ist. Gemäß verschiedenen Ausführungsformen kann, wenn das verbleibende Filament kleiner als oder gleich dem vordefinierten Filament-Schwellenwert ist, der Druckvorgang pausiert werden wenn der Druckkopf in einem Nicht-Sichtbar-Druckbereich des dreidimensionalen Objekts ist (z.B. nachdem der Druckkopf zum Wechseln der Filamentspule in den Nicht-Sichtbar-Druckbereich bewegt wurde oder der Druckkopf kann zu diesem Zeitpunkt schon in einem Nicht-Sichtbar-Druckbereich des dreidimensionalen Objekts sein). Optional kann der Druckkopf beim Pausieren des Druckvorgangs in eine vorgegebene Parkposition bewegt werden. Gemäß manchen Ausführungsformen kann die Filamentspule während des Pausierens des Druckvorgangs mit der anderen Filamentspule getauscht werden (z.B. während der Druckkopf in dem Nicht-Sichtbar-Druckbereich ist oder während der Druckkopf in der vorgegebenen Parkposition ist) und der Druckvorgang kann nach dem Tauschen der Filamentspule mit dem Druckkopf fortgesetzt werden. Gemäß verschiedenen Ausführungsformen kann ermittelt werden, ob ein anderer Druckkopf mit einem von einer anderen Filamentspule abgewickelten Filament zur Verfügung steht, und wenn ermittelt wird, dass ein anderer Druckkopf mit einem von einer anderen Filamentspule abgewickelten Filament zur Verfügung steht, kann (z.B. während der zuvor verwendete Druckkopf in der vorgegebenen Parkposition ist) der andere Druckkopf in den Nicht-Sichtbar-Druckbereich des dreidimensionalen Objekts bewegt werden und der Druckvorgang kann unter Verwendung des anderen Druckkopfes fortgesetzt werden. So könnte zwar möglicherweise ein Versatz in der Füllstruktur entstehen, aber dieser wird während des fortlaufenden 3D-Druckens gefüllt oder ist zumindest nicht sichtbar. Folglich können auf diese Weise Oberflächendefekte aufgrund des Spulenwechsels verhindert werden.

Ausführungsbeispiele der Erfindung sind in den Figuren dargestellt und werden im Folgenden näher erläutert. Es zeigen:
Figur 1A bis Figur 1D jeweils eine Vorrichtung zum Wechseln einer Filamentspule während des Druckens eines dreidimensionalen Objekts gemäß verschiedenen Ausführungsformen;
Figur 2 eine beispielhafte Detektionsvorrichtung zum permanenten Detektieren einer Geschwindigkeit eines von einer Filamentspule abgewickelten Filaments gemäß verschiedenen Ausführungsformen;
Figur 3A und Figur 3B jeweils ein Verarbeitungsschema zum Erzeugen von Steuerdaten, um einen Druckkopf zum Wechseln der Filamentspule in einen Nicht-Sichtbar-Druckbereich zu bewegen, gemäß verschiedenen Ausführungsformen;
Figur 4 ein schematisches System zum Drucken dreidimensionaler Objekte in Schichten mittels eines Schmelzschichtverfahrens gemäß verschiedenen Ausführungsformen;
Figur 5A eine Vorderansicht und Figur 5B eine Seitenansicht eines beispielhaften Systems zum Drucken dreidimensionaler Objekte gemäß verschiedenen Ausführungsformen; und
Figur 6 ein Flussdiagramm eines Verfahrens zum Wechseln einer Filamentspule während des Druckens eines dreidimensionalen Objekts gemäß verschiedenen Ausführungsformen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In den Zeichnungen beziehen sich gleiche Bezugszeichen im Allgemeinen auf die gleichen Teile. Die Zeichnungen sind nicht notwendigerweise maßstabsgetreu, da der Schwerpunkt im Allgemeinen auf der Veranschaulichung der Prinzipien der Erfindung liegt.

Beim Drucken dreidimensionaler Objekte (auch als 3D-Drucken bezeichnet) mittels eines Schmelzschichtverfahrens wird ein Filament (z.B. ein Filamentfaden) von einer Filamentspule abgewickelt und in einem Druckkopf verflüssigt. Ist das Filament der Filamentspule verbraucht, so wird die Filamentspule mit einer anderen Filamentspule ersetzt. Dieser Austauschvorgang kann während des 3D-Druckens erfolgen. Wird allerdings zum Zeitpunkt des Austauschvorgangs gerade ein sichtbarer Bereich (z.B. eine Sichtseite) des dreidimensionalen Objekts gedruckt bzw. wurde der Druckvorgang pausiert nachdem der Druckkopf einen sichtbaren Bereich des dreidimensionalen Objekts gedruckt hat, so kann das Austauschen der Filamentspule zu sichtbaren Oberflächendefekten führen. Verschiedene Ausführungsbeispiele betreffen eine Vorrichtung und ein Verfahren, welche derartige sichtbare Oberflächendefekte verhindern können. Dies wird erreicht, indem während des 3D-Druckens erfasst und/oder ermittelt wird, ob sich das Filament dem Ende neigt (z.B. ob das verbleibende Filament kleiner als oder gleich einem vordefinierten Filament-Schwellenwert ist) und falls sich das Filament der Filamentspule dem Ende neigt, wird der Druckkopf für den Wechsel der Filamentspule in einen Nicht-Sichtbar-Druckbereich des dreidimensionalen Objekts bewegt und der Druckvorgang dort pausiert. Ist der Druckkopf schon in einem Nicht-Sichtbar-Druckbereich des dreidimensionalen Objekts, so kann der Druckvorgang dort pausiert werden.

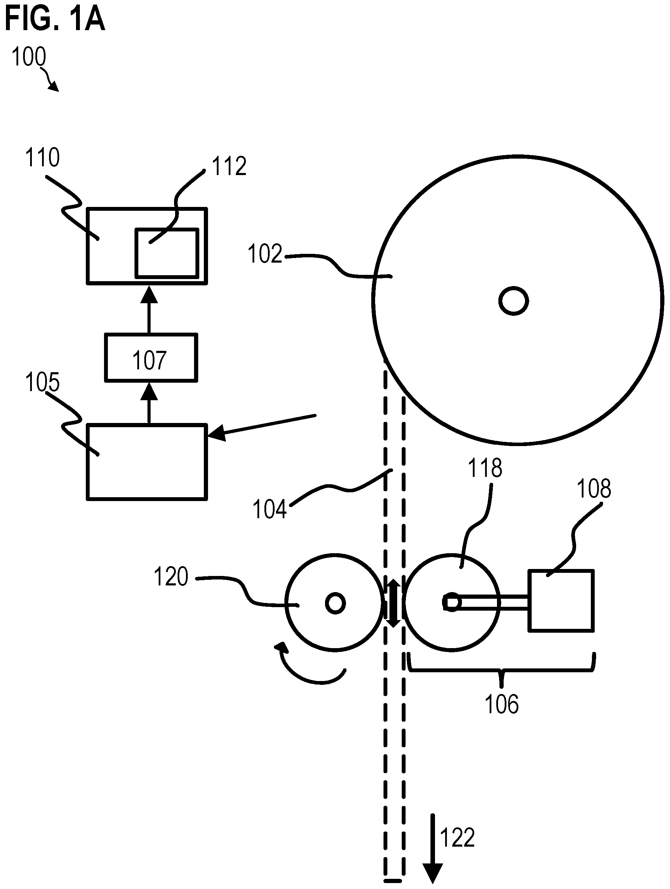

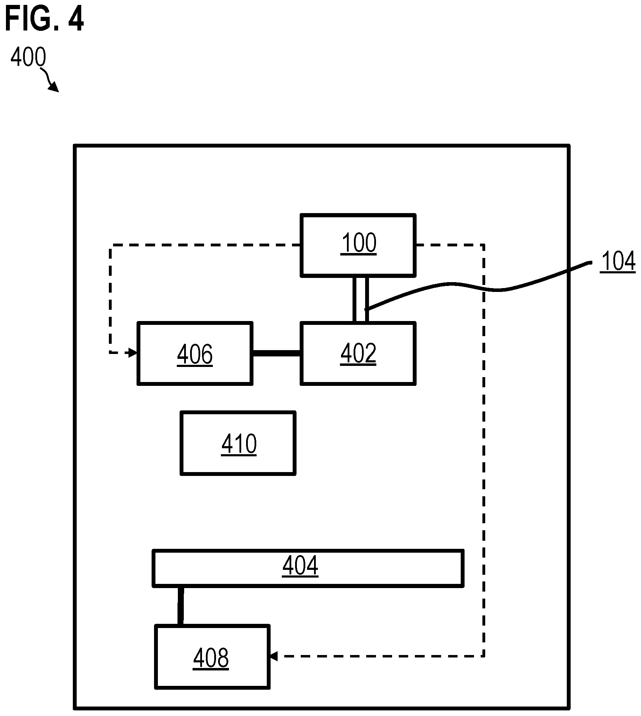

**FIG.1A** zeigt eine Vorrichtung 100 zum Wechseln einer Filamentspule während des Druckens eines dreidimensionalen Objekts gemäß verschiedenen Ausführungsformen. Die Vorrichtung 100 weist eine Filamentspule 102 auf. Auf der Filamentspule 102 kann ein Filament (z.B. ein Filamentfaden) aufgewickelt sein. Das Filament kann zum Drucken eines dreidimensionalen Objekts (auch als 3D-Drucken bezeichnet) verwendet werden. Das Filament kann aus einem beliebigen Material bestehen, welches zum 3D-Drucken geeignet ist, wie beispielsweise ein Kunststoff, ein Metall, eine Metalllegierung, etc. Die Vorrichtung 100 kann eine Antriebsvorrichtung 106 aufweisen. Die Antriebsvorrichtung 106 ist eingerichtet, das Filament 104 so anzutreiben, um das Filament von der Filamentspule 102 abzuwickeln. Beispielsweise kann die Antriebsvorrichtung 106 eingerichtet sein, das Filament von der Filamentspule 102 abzuwickeln und einem Druckkopf (siehe zum Beispiel Druckkopf 402 in FIG.4) zuzuführen. Der Druckkopf (z.B. Druckkopf 402) kann eingerichtet sein, das Filament zu erhitzen und von einem festen Zustand in einen viskosen Zustand zu überführen, um das dreidimensionale Objekt (z.B. auf einem Druckbett) (beispielsweise gemäß vordefinierten Druckdaten) zu drucken. Folglich kann das Filament während des Druckens des dreidimensionalen Objekts verbraucht werden, so dass zu jedem Zeitpunkt eine gewisse Menge (z.B. Länge) des Filaments verbleibt. Dieses verbleibende Filament 104 kann anfangs sowohl eine Menge (z.B. Länge) zwischen dem Druckkopf und der Filamentspule 102 als auch eine auf der Filamentspule 102 aufgewickelte Menge (z.B. Länge) aufweisen. Wird das verbleibende Filament 104 weiter beim Drucken des dreidimensionalen Objekts verbraucht, so kann ab einem bestimmten Zeitpunkt kein Filament mehr auf der Filamentspule 102 vorhanden sein und das verbleibende Filament 104 kann lediglich eine Menge (z.B. Länge) von Filament zwischen dem Druckkopf und einem Punkt (entlang des Bewegungspfads des Filaments) zwischen dem Druckkopf und der Filamentspule 102 aufweisen. Wird das verbleibende Filament 104 dann noch weiter verbraucht, so kann das Filament zu einem Endzeitpunkt vollständig verbraucht sein (so dass folglich kein verbleibendes Filament 104 mehr vorliegt).

Die Antriebsvorrichtung 106 weist mindestens einen Motor auf, wie beispielsweise den Motor 108. Der Motor 108 kann eingerichtet sein, das verbleibende Filament 104 anzutreiben und so mit einer bestimmten Geschwindigkeit (z.B. in Richtung des Druckkopfes) zu bewegen (z.B. zu transportieren). In einer beispielhaften Ausgestaltung kann die Antriebsvorrichtung 106 mindestens eine Antriebsscheibe aufweisen, welche mit dem Filament mittels eines Liniendrucks oder Flächendrucks gekoppelt sein kann. Anschaulich kann so eine (z.B. durch den Motor 108 induzierte) Drehung der mindestens einen Antriebsscheibe eine Bewegung des Filaments 104 induzieren. FIG.1A zeigt beispielhaft eine Ausgestaltung mit einer ersten Antriebsscheibe 118 und einer zweiten Antriebsscheibe 120. Es wird verstanden, dass die Vorrichtung 100 auch lediglich eine Antriebsscheibe oder mehr als zwei Antriebsscheiben aufweisen kann. Hierbei kann ein Motor mehrere Antriebsscheiben antreiben oder jede Antriebsscheibe kann von genau einem bijektiv zugeordneten Motor angetrieben werden oder nur einzelne Antriebsscheiben können von einem zugeordneten Motor angetrieben werden. In der in FIG.1A gezeigten Ausgestaltung kann das Filament zwischen der ersten Antriebsscheibe 118 und der zweiten Antriebsscheibe 120 transportiert werden. Anschaulich können die erste Antriebsscheibe 118 und die zweite Antriebsscheibe 120 ein Gegenlager zueinander bereitstellen. Zum Beispiel kann der Motor 108 eine Antriebswelle aufweisen, welche formschlüssig oder kraftschlüssig mit der ersten Antriebsscheibe 118 gekoppelt ist. Der Motor 108 kann das Filament in Richtung 122 bewegen (z.B. transportieren). Es wird verstanden, dass die Vorrichtung 100 auch mehrere Antriebsvorrichtungen aufweisen kann, welche jeweils gemäß einer Ausgestaltung der Antriebsvorrichtung 106 eingerichtet sein können.

Gemäß verschiedenen Ausführungsformen weist die Vorrichtung 100 eine Steuervorrichtung 110 auf. Die Steuervorrichtung 110 kann eingerichtet sein, eine digitale Datenverarbeitung durchzuführen. Hierzu kann die Steuervorrichtung 110 zum Beispiel mindestens einen Prozessor aufweisen. Im Rahmen der digitalen Datenverarbeitung kann die Steuervorrichtung 110 zum Beispiel eine Speichervorrichtung 112 aufweisen. Zu Datenverarbeitung kann die Steuervorrichtung 110 verschiedene Algorithmen (z.B. durch Software definiert) verwenden. Diese Algorithmen (z.B. die Software) kann in der Speichervorrichtung 112 gespeichert sein. Werden, wie hierin beschrieben, Daten und/oder Informationen von einer Komponente an die Steuervorrichtung 110 bereitgestellt, so können diese direkt an die Steuervorrichtung 110 übermittelt werden (z.B. in der Speichervorrichtung 112 der Steuervorrichtung 110 gespeichert werden) oder indirekt mittels ein oder mehrerer anderer Komponenten an die Steuervorrichtung 110 übermittelt werden.

Gemäß verschiedenen Ausführungsformen kann die Vorrichtung 100 eine oder mehrere Detektionsvorrichtungen 105 aufweisen. Die ein oder mehreren Detektionsvorrichtungen 105 können eingerichtet sein, (direkt oder indirekt) zu erfassen, ob das verbleibende Filament kleiner als oder gleich einem vordefinierten Filament-Schwellenwert ist. Anschaulich können die ein oder mehreren Detektionsvorrichtungen 105 ein oder mehrere Indikatoren erfassen, welche direkt oder indirekt einen Hinweis darauf liefern, ob sich das verbleibende Filament 104 dem Ende neigt.

Der vordefinierte Filament-Schwellenwert ist derart ausgewählt, dass, wenn der vordefinierte Filament-Schwellenwert erreicht ist, ausreichend verbleibendes Filament 104 vorhanden ist, um den Druckkopf während des Druckens des dreidimensionalen Objekts aktiv in einen Nicht-Sichtbar-Druckbereich des dreidimensionalen Objekts zu bewegen (z.B. mittels Bewegens des Druckkopfes selbst und/oder mittels Bewegens eines Druckbetts, auf welchem das dreidimensionale Objekt gedruckt wird).

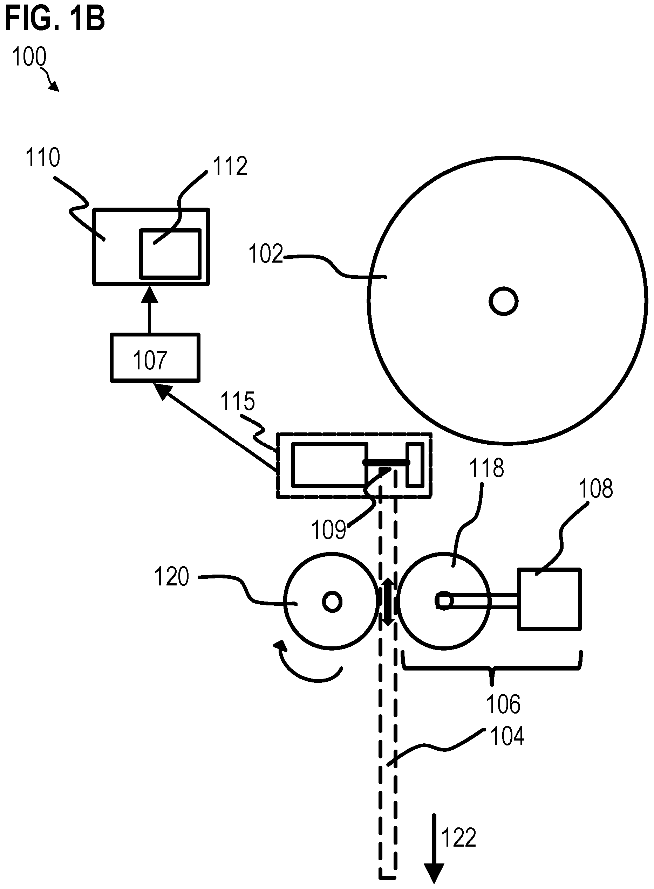

In manchen Ausführungsformen können die ein oder mehreren Detektionsvorrichtungen 105 einen Auslöser (auch als Trigger bezeichnet) erfassen, welcher angibt, dass das verbleibende Filament kleiner als oder gleich dem vordefinierten Filament-Schwellenwert ist. Zum Beispiel können die ein oder mehreren Detektionsvorrichtungen 105 mindestens eine (z.B. mechanische und/oder optische) Detektionsvorrichtung aufweisen, die eingerichtet ist, als Auslöser zu erfassen, ob ein Ende 109 des verbleibenden Filaments 104 die mindestens eine Detektionsvorrichtung passiert. Hierzu kann die mindestens eine Detektionsvorrichtung beispielsweise einen Taster, einen Druckschalter (z.B. mit Wippe), eine Lichtschranke, etc. verwenden. **FIG.1B** zeigt eine beispielhafte Ausgestaltung in welcher die mindestens eine Detektionsvorrichtung der ein oder mehreren Detektionsvorrichtungen 105 eine Lichtschranke 115 ist. Zusätzlich oder alternativ können die ein oder mehreren Detektionsvorrichtungen 105 mindestens eine (z.B. mechanische und/oder optische) Detektionsvorrichtung aufweisen, die eingerichtet ist, als Auslöser zu erfassen, ob ein bestimmter Bereich bzw. Punkt des verbleibenden Filaments 104 die mindestens eine Detektionsvorrichtung passiert. Hierzu kann das Filament beispielsweise eine Markierung aufweisen, welche angibt, dass das verbleibende Filament gleich dem vordefinierten Filament-Schwellenwert ist. Eine solche Markierung kann zum Beispiel eine optische Markierung und/oder eine mechanische Markierung sein. Gemäß verschiedenen Ausführungsformen kann mindestens eine Detektionsvorrichtung eingerichtet sein, diese (z.B. optische und/oder mechanische) Markierung als Auslöser zu erfassen. In einem Beispiel können die ein oder mehreren Detektionsvorrichtungen 105 eingerichtet sein, einen Zugspannungs-Schwellenwert einer Zugspannung des verbleibenden Filaments 104 und/oder einen Druckspannungs-Schwellenwert einer Druckspannung des verbleibenden Filaments 104 als Auslöser zu erfassen. Auch können die ein oder mehreren Detektionsvorrichtungen 105 eingerichtet sein, eine Menge (z.B. Länge) des verbleibenden Filaments 104 zu erfassen während noch ein Teil des verbleibenden Filaments 104 auf der Filamentspule 102 aufgewickelt ist. Zum Beispiel kann mindestens eine Detektionsvorrichtung der ein oder mehreren Detektionsvorrichtungen 105 eingerichtet sein, einen Gewichts-Schwellenwert eines Gewichts der Filamentspule 102 als Auslöser zu erfassen. Die ein oder mehreren Detektionsvorrichtungen 105 können eingerichtet sein, das Erfassen mindestens eines Auslösers als Filament-Informationen 107 an die Steuervorrichtung 110 bereitzustellen.

In manchen Ausführungsformen kann mindestens eine Detektionsvorrichtung der ein oder mehreren Detektionsvorrichtungen 105 eingerichtet sein, kontinuierlich ein oder mehrere Indikatoren zu erfassen und als Filament-Informationen 107 an die Steuervorrichtung 110 bereitzustellen. Zum Beispiel mindestens eine Detektionsvorrichtung der ein oder mehreren Detektionsvorrichtungen 105 kontinuierlich ein Gewicht der Filamentspule 102 erfassen und die Steuervorrichtung 110 kann ermitteln, ob das erfasste Gewicht kleiner als oder gleich dem Gewichts-Schwellenwert ist. Zum Beispiel kann mindestens eine Detektionsvorrichtung der ein oder mehreren Detektionsvorrichtungen 105 kontinuierlich eine Zugspannung und/oder Druckspannung des verbleibenden Filaments 104 erfassen und die Steuervorrichtung 110 kann ermitteln, ob die erfasste Zugspannung kleiner als oder gleich dem Zugspannungs-Schwellenwert ist und/oder ob die erfasste Druckspannung kleiner als oder gleich dem Druckspannungs-Schwellenwert ist. Es wird verstanden, dass die hierin beschriebenen Indikatoren beispielhaft sind und dass jeder andere Indikator verwendet werden kann, der geeignet ist, anzugeben, ob das verbleibende Filament kleiner als oder gleich dem vordefinierten Filament-Schwellenwert ist.

In einer beispielhaften Ausgestaltung kann mindestens eine Detektionsvorrichtung der ein oder mehreren Detektionsvorrichtungen 105 eingerichtet sein, (als Indikator) permanent eine Geschwindigkeit des von der Filamentspule 102 abgewickelten Filaments zu detektieren. Der Ausdruck "permanent" in Bezug auf das Detektieren einer Geschwindigkeit kann verstanden werden als ein Detektieren eines jeweiligen Geschwindigkeitswerts in einem vordefinierten Takt, wie beispielsweise einer Anzahl pro vordefiniertem Zeitintervall (z.B. einmal pro Sekunde, zweimal pro Sekunde, alle zehn Sekunden, alle zwanzig Sekunden, alle dreißig Sekunden, etc.). Folglich kann das permanente Detektieren der Geschwindigkeit des Filaments ein kontinuierliches Detektieren eines Geschwindigkeitswerts aufweisen. Anschaulich kann die detektierte Geschwindigkeit nach einem Zeitintervall eine Vielzahl von Geschwindigkeitswerten aufweisen. Die mindestens eine Detektionsvorrichtung der ein oder mehreren Detektionsvorrichtungen 105 kann eingerichtet sein, einen Geschwindigkeitswert der Geschwindigkeit des von der Filamentspule 102 abgewickelten Filaments als Filament-Informationen 107 an die Steuervorrichtung 110 bereitzustellen. Der Geschwindigkeitswert kann hierbei als analoges Signal oder digitales Signal erfasst. Der Geschwindigkeitswert kann als analoges Signal oder digitales Signal an die Steuervorrichtung 110 bereitgestellt werden. Die mindestens eine Detektionsvorrichtung kann jede geeignete Art von Sensor aufweisen, mittels welchem eine Geschwindigkeit des Filaments erfasst werden kann oder welcher Informationen erfasst, anhand welcher die Geschwindigkeit des Filaments ermittelt werden kann. Die Steuervorrichtung 110 kann eingerichtet sein, anhand der permanent erfassten Geschwindigkeit des von der Filamentspule 102 abgewickelten Filaments eine Menge (z.B. Länge) des verbleibenden Filaments 104 zu ermitteln.

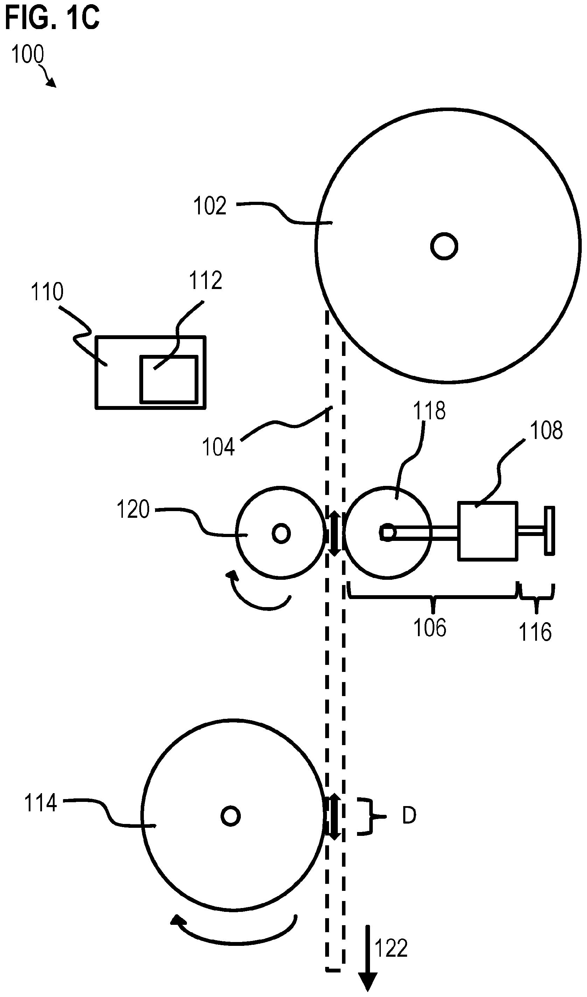

**FIG.1C** zeigt die Vorrichtung 100 gemäß einer beispielhaften Ausgestaltung, in welcher die ein oder mehreren Detektionsvorrichtungen 105 eine erste Detektionsvorrichtung 114 und eine zweite Detektionsvorrichtung 116 aufweisen. Es wird verstanden, dass die Vorrichtung 100 in manchen Ausgestaltungen auch nur eine dieser Detektionsvorrichtungen (also die erste Detektionsvorrichtung 114 oder die zweite Detektionsvorrichtung 116) aufweisen kann. Es wird ebenfalls verstanden, dass die Vorrichtung 100 in manchen Ausgestaltungen zusätzlich mindestens eine Detektionsvorrichtung zum Erfassen eines Auslösers (z.B. die Lichtschranke 115 zum Erfassen, ob das Ende 109 des verbleibenden Filaments 104) aufweisen kann oder alternativ zu der ersten Detektionsvorrichtung 114 und der zweiten Detektionsvorrichtung 116 mindestens eine Detektionsvorrichtung zum Erfassen eines Auslösers (z.B. der Lichtschranke 115) aufweisen kann. So kann die Vorrichtung 100 in manchen Ausgestaltungen genau eine Detektionsvorrichtung zum Erfassen eines Auslösers (z.B. die Lichtschranke 115) aufweisen. In anderen Ausgestaltungen kann die Vorrichtung 100 mehrere Detektionsvorrichtungen zum Erfassen eines Auslösers aufweisen (z.B. mehrere gemäß der Lichtschranke 115 eingerichtete Lichtschranken, welche an verschieden Positionen entlang des Pfades des Filaments angeordnet sind; und/oder mehrere Detektionsvorrichtungen, die eingerichtet sind, voneinander verschiedene Auslöser zu erfassen, wie beispielsweise die Lichtschranke 115 zum Erfassen, ob das Ende 109 des verbleibenden Filaments 104 die Lichtschranke 115 passiert, und einen Sensor zum Erfassen, ob eine Zugspannung und/oder Druckspannung des verbleibenden Filaments 104 einen zugeordneten Schwellenwert erreicht).

Die erste Detektionsvorrichtung 114 kann eingerichtet sein, in einem ersten Takt jeweils einen ersten Geschwindigkeitswert der Geschwindigkeit des Filaments (zumindest in Richtung 122) zu erfassen oder zu ermitteln.

Die zweite Detektionsvorrichtung 116 kann eingerichtet sein, in einem zweiten Takt (welcher von dem ersten Takt verschieden sein kann oder gleich sein kann) jeweils einen zweiten Geschwindigkeitswert der Geschwindigkeit des Filaments (zumindest in Richtung 122) zu erfassen oder zu ermitteln. Gemäß einer beispielhaften Ausgestaltung kann die zweite Detektionsvorrichtung 116 eingerichtet sein, eine Rotationsgeschwindigkeit der Antriebswelle des Motors 108 zu erfassen und den zweiten Geschwindigkeitswert anhand der Rotationsgeschwindigkeit der Antriebswelle zu ermitteln. Die zweite Detektionsvorrichtung 116 kann einen inkrementalen Encoder mit einem Empfänger aufweisen. Zum Beispiel kann die zweite Detektionsvorrichtung 116 eine Lichtquelle, eine Encoder-Scheibe und mindestens einen Empfänger (z.B. einen Lichtsensor) aufweisen. Hierbei kann die Encoder-Scheibe eine Vielzahl von Aussparungen in Umfangsrichtung aufweisen. Die Lichtquelle kann eingerichtet sein, Licht auf die Encoder-Scheibe zu strahlen, so dass zumindest ein Teil des Lichts durch die Vielzahl von Aussparungen der Encoder-Scheibe hindurchdringen kann. Der Empfänger (z.B. der Lichtsensor) kann eingerichtet sein, das durch die Vielzahl von Aussparungen der Encoder-Scheibe hindurchgedrungene Licht zu erfassen. Das von dem Empfänger (z.B. dem Lichtsensor) erfasste Signal ist von der Rotationsgeschwindigkeit der Antriebswelle des Motors 108 abhängig. Folglich kann anhand des erfassten Signals die Rotationsgeschwindigkeit der Antriebswelle und basierend darauf der zweite Geschwindigkeitswert ermittelt werden.

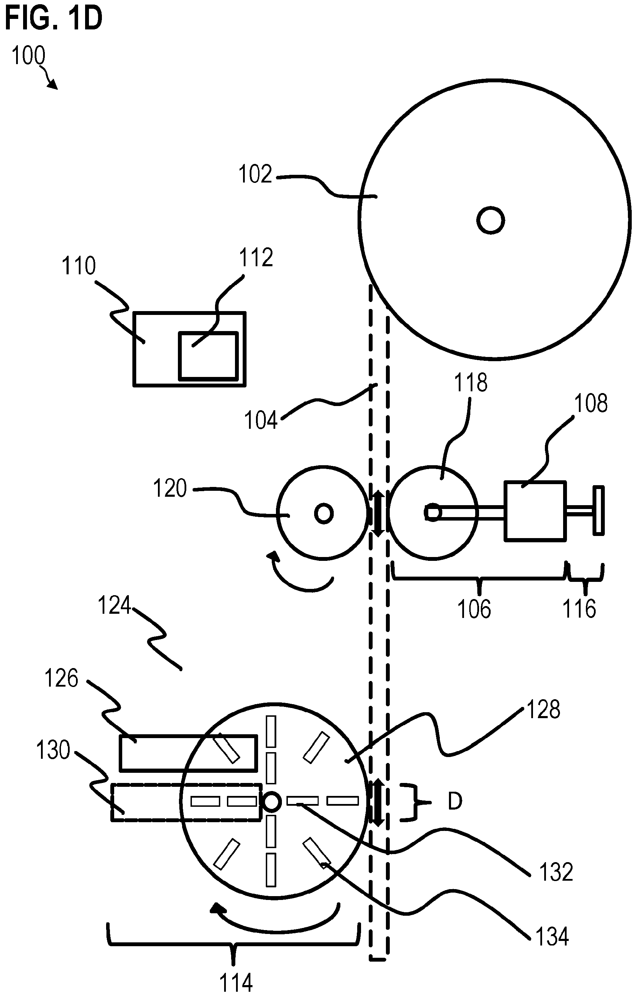

**FIG.1D** zeigt die Vorrichtung 100 mit einer beispielhaften Ausgestaltung der ersten Detektionsvorrichtung 114. Die erste Detektionsvorrichtung 114 kann einen inkrementalen Encoder 124 aufweisen. Der inkrementale Encoder 124 kann eine Lichtquelle 126, eine Encoder-Scheibe 128 und einen Lichtsensor 130 aufweisen. In einem Beispiel (wie in FIG.1C gezeigt) kann der Lichtsensor 130 hinter der Encoder-Scheibe 128 (in der gezeigten Seitenansicht) angeordnet sein. Die Encoder-Scheibe 128 kann in direkten physischen Kontakt mit dem Filament angeordnet sein. Die Encoder-Scheibe 128 kann derart eingerichtet sein, dass sich die Encoder-Scheibe 128 dreht, wenn das Filament bewegt (z.B. transportiert) wird. Die Lichtquelle 126 kann eingerichtet sein, Lichtstrahlen in Richtung der Encoder-Scheibe 128 auszusenden. Der Lichtsensor 130 kann eingerichtet sein, von der Lichtquelle 126 ausgesendete und durch die Encoder-Scheibe 128 hindurchgetretene Lichtstrahlen zu erfassen. Das auf diesen durch die Encoder-Scheibe 128 hindurchgetretenen Lichtstrahlen basierende erfasste Signal ist folglich von der Drehgeschwindigkeit der Encoder-Scheibe 128 abhängig. Die erste Detektionsvorrichtung 114 kann eingerichtet sein, den ersten Geschwindigkeitswert der Geschwindigkeit des Filaments anhand dieses erfassten Signals zu ermitteln. Die Encoder-Scheibe 128 kann einen ersten inkrementalen Abschnitt 132 und einen zweiten inkrementalen Abschnitt 134 aufweisen. Der erste inkrementale Abschnitt 132 und der zweite inkrementale Abschnitt 134 können voneinander verschiedene Auflösungen bereitstellen.

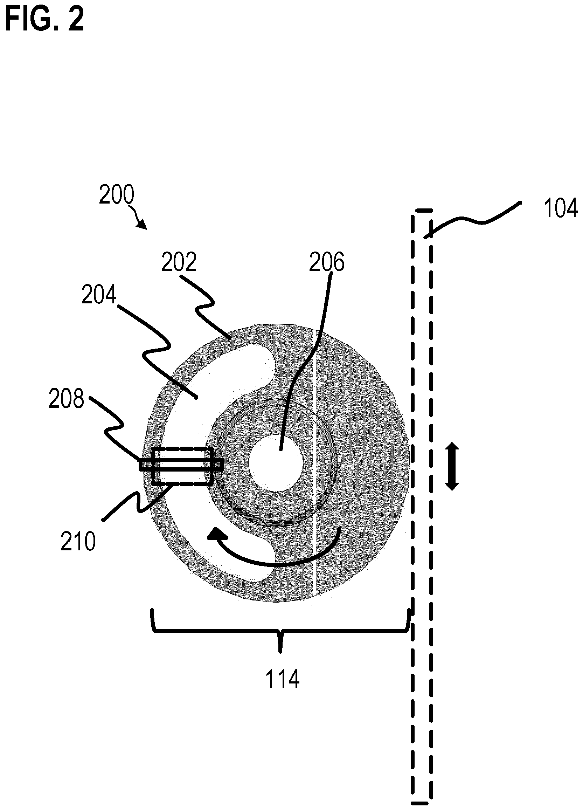

**FIG.2** zeigt eine beispielhafte Ausgestaltung der ersten Detektionsvorrichtung 114, in welcher die erste Detektionsvorrichtung 114 einen anderen Encoder 200 aufweist. Der andere Encoder 200 kann eine Encoder-Scheibe, eine Sendeeinheit 208 und eine Empfangseinheit 210 aufweisen. Die Encoder-Scheibe kann eine Scheibe 202 und eine Vertiefung 204 (oder einen Schlitz) aufweisen. Eine Bewegung des Filaments kann eine Bewegung der Encoder-Scheibe um die Achse 208 induzieren. Die Sendeeinheit 208 und die Empfangseinheit 210 können derart aufeinander abgestimmt sein, dass diese eine Rotationsgeschwindigkeit der Encoder-Scheibe erfassen können. Zum Beispiel kann die Sendeeinheit 208 eine Lichtquelle sein und die Empfangseinheit 210 kann eingerichtet sein, durch die Encoder-Scheibe hindurchgetretenes Licht oder von der Encoder-Scheibe reflektiertes Licht zu erfassen. Zum Beispiel kann die Encoder-Scheibe ein metallisches Material (z.B. Eisen) aufweisen oder daraus bestehen und die Empfangseinheit 210 kann ein Magnetresonanz-Sensor oder ein Hall-Sensor sein. Gemäß verschiedenen Ausführungsformen können mehrere Encoder-Scheiben verwendet werden. Hierbei kann zum Beispiel die Größe der Vertiefung 204 der mehreren Encoder-Scheiben voneinander verschieden sein, so dass verschiedene Auflösungen detektiert werden können.

Wie hierin beschrieben, kann die Antriebsvorrichtung 106 das Filament in Richtung 122 bewegen (z.B. transportieren), zum Beispiel um eine Strecke, D, (in manchen Aspekten auch als Weg, Wegstrecke oder Distanz bezeichnet).

Gemäß verschiedenen Ausführungsformen kann die Steuervorrichtung 110 eingerichtet sein, die Filament-Informationen 107 empfangen. Wie hierin beschrieben, können die Filament-Informationen angeben, ob das verbleibende Filament 104 kleiner als oder gleich einem vordefinierten Filament-Schwellenwert ist. Wie beschrieben, können die Filament-Informationen 107 Daten aufweisen, welche von den ein oder mehreren Detektionsvorrichtungen 105 erfasst werden. Daher können die Filament-Informationen 107 (z.B. permanent erfasste) Daten aufweisen, anhand welcher die Steuervorrichtung 110 ermitteln kann, ob das verbleibende Filament 104 kleiner als oder gleich einem vordefinierten Filament-Schwellenwert ist, und/oder die Filament-Informationen 107 können Daten bezüglich ein oder mehrerer Auslöser aufweisen, direkt angeben, dass das verbleibende Filament 104 kleiner als oder gleich einem vordefinierten Filament-Schwellenwert ist.

Gemäß verschiedenen Ausführungsformen kann die Steuervorrichtung 110 eingerichtet sein, wenn die Filament-Informationen 107 angeben, dass das verbleibende Filament 104 (z.B. eine Menge (z.B. Länge) des verbleibenden Filaments 104) kleiner als oder gleich dem vordefinierten Filament-Schwellenwert ist, (z.B. unabhängig davon von welcher Detektionsvorrichtung bzw. welchen Detektionsvorrichtungen der ein oder mehreren Detektionsvorrichtungen 105 die Filament-Informationen 107 empfangen wurden) zu ermitteln, ob sich der Druckkopf in einem Nicht-Sichtbar-Druckbereich befindet. Befindet sich der Druckkopf schon in einem Nicht-Sichtbar-Druckbereich, so kann die Steuervorrichtung 110 den Druckvorgang zum Wechseln der Filamentspule 102 zu dem Zeitpunkt, an dem der Druckkopf in dem Nicht-Sichtbar-Druckbereich ist, pausieren. Optional kann der Druckkopf beim Pausieren in eine Parkposition (z.B. eine Position außerhalb des Druckbereiches und/oder außerhalb des dreidimensionalen Objekts) bewegt werden. Befindet sich der Druckkopf noch nicht in einem Nicht-Sichtbar-Druckbereich (also in dem Fall, in dem Druckkopf beim Ermitteln, dass das verbleibende Filament 104 kleiner als oder gleich dem vordefinierten Filament-Schwellenwert ist, in einem Sichtbar-Bereich des dreidimensionalen Objekts ist), so kann die Steuervorrichtung 110 den Druckkopf in einen Nicht-Sichtbar-Druckbereich des dreidimensionalen Objekts bewegen und kann den Druckvorgang zum Wechseln der Filamentspule 102 dort pausieren. Folglich kann der Druckvorgang in jedem Fall zu einem Zeitpunkt pausiert werden, an dem der Druckkopf in einem Nicht-Sichtbar-Druckbereich des dreidimensionalen Objekts ist.

Gemäß verschiedenen Ausführungsformen kann die Steuervorrichtung 110 eingerichtet sein, den Druckvorgang entweder nach dem Wechseln der Filamentspule 102 mittels des Druckkopfes in dem Nicht-Sichtbar-Druckbereich des dreidimensionalen Objekts fortzusetzen (z.B. kann der Druckkopf nach dem Wechseln der Filamentspule 102 von der Parkposition zurück in den Nicht-Sichtbar-Druckbereich des dreidimensionalen Objekts bewegt werden) oder kann den Druckvorgang mit einem anderen Druckkopf in dem Nicht-Sichtbar-Druckbereich des dreidimensionalen Objekts (in welchem der Druckkopf beim Pausieren des Druckvorgangs war) fortsetzen. Zum Beispiel kann die Steuervorrichtung 110 eingerichtet sein, zu ermitteln, ob ein anderer Druckkopf zur Verfügung steht, welcher ein Filament von einer anderen (noch nicht aufgebrauchten) Filamentspule bezieht. Steht ein anderer Druckkopf zur Verfügung, so kann die Steuervorrichtung 110 den anderen Druckkopf in den Nicht-Sichtbar-Druckbereich des dreidimensionalen Objekts (in welchem der Druckvorgang pausiert wurde) bewegen und den Druckvorgang dann mittels des anderen Druckkopfes fortsetzen. Steht kein anderer Druckkopf zur Verfügung (z.B., da die Vorrichtung 100 bzw. das System keinen anderen Druckkopf aufweist oder da keinem anderen Druckkopf ein Filament zum Drucken des dreidimensionalen Objekts zur Verfügung steht (z.B. da das Filament verbraucht ist oder da das Filament einer anderen Filamentspule ein anderes Material aufweist)), so kann die Steuervorrichtung 110 eingerichtet sein, den Druckvorgang nach dem Wechseln der Filamentspule 102 mit dem (zuvor verwendeten) Druckkopf fortzusetzen (z.B. diesen von der Parkposition zurück in den Nicht-Sichtbar-Druckbereich zu bewegen und das Drucken dann in dem Nicht-Sichtbar-Druckbereich fortzusetzen).

Wie hierin beschrieben, kann die Steuervorrichtung 110 eingerichtet sein, die von der mindestens einen Detektionsvorrichtung (z.B. der ersten Detektionsvorrichtung 114 und/oder der zweiten Detektionsvorrichtung 116) detektierten Geschwindigkeitswerte (z.B. als Vielzahl von ersten Geschwindigkeitswerten bzw. als Vielzahl von zweiten Geschwindigkeitswerten) zu empfangen. In diesem Fall kann die Steuervorrichtung 110 eingerichtet sein, unter Verwendung der detektierten Geschwindigkeitswerte (also der permanent detektierten Geschwindigkeit des Filaments) eine absolut zurückgelegte Strecke des von der Filamentspule 102 abgewickelten Filaments zu ermitteln. Als "absolute" Strecke, wie hierin verwendet, kann die Strecke seit Beginn des Abwickelns des Filaments von der Filamentspule verstanden werden (also von einer "neuen" Filamentspule, von welcher zuvor noch kein Filament abgewickelt war). Anschaulich kann die Steuervorrichtung 110 anhand der Geschwindigkeit, mit der das Filament von der Filamentspule 102 abgerollt wird, (und anhand der Zeit) ermitteln, welche Länge des Filaments bereits von der Filamentspule 102 abgewickelt wurde. Dieses Ermitteln kann in vordefinierten Zeitintervallen erfolgen. Gemäß verschiedenen Ausführungsformen kann die Steuervorrichtung 110 eingerichtet sein, anhand dieser Länge das verbleibende Filament 104 (z.B. eine Länge des verbleibenden Filaments 104) zu ermitteln.

Wie hierin beschrieben, können die Filament-Informationen entweder explizit angeben, dass das verbleibende Filament kleiner als oder gleich dem vordefinierten Filament-Schwellenwert ist, (z.B. im Falle eines Auslösers) oder implizit angeben, ob das verbleibende Filament kleiner als oder gleich dem vordefinierten Filament-Schwellenwert ist (z.B. im Falle des kontinuierlichen Detektierens des Gewichts der Filamentspule 102, der Zugspannung und/oder Druckspannung des Filaments, und/oder der Geschwindigkeit mit welcher das Filament von der Filamentspule 102 abgewickelt wird. Im Falle der impliziten Angabe kann die Steuervorrichtung 110 eingerichtet sein, anhand der Filament-Informationen 107 zu ermitteln, ob das verbleibende Filaments kleiner als oder gleich dem vordefinierten Filament-Schwellenwert ist.

Wie hierin beschrieben, kann die Steuervorrichtung 110 eingerichtet sein, den Druckkopf zum Wechseln der Filamentspule 102 unter Berücksichtigung von Druckdaten (z.B. aktiv) in einen Nicht-Sichtbar-Druckbereich des dreidimensionalen Objekts zu bewegen und/oder zu ermitteln, ob der Druckkopf bereits in einem Nicht-Sichtbar-Druckbereich des dreidimensionalen Objekts ist. Als "Sichtbar-Druckbereich", wie hierin beschrieben, kann jeder Bereich des dreidimensionalen Objekts verstanden werden, welcher im fertig gedruckten Zustand des dreidimensionalen Objekts aus irgendeiner Perspektive für einen Betrachter sichtbar ist. Dies kann eine äußere Oberfläche, aber auch eine Oberfläche in einer Aushöhlung, einem Durchgangsloch, etc. sein. Als "Nicht-Sichtbar-Druckbereich", wie hierin beschrieben, kann jeder Bereich des dreidimensionalen Objekts verstanden werden, welcher (egal aus welcher Perspektive) im fertig gedruckten Zustand des dreidimensionalen Objekts für einen Betrachter nicht sichtbar ist. Dies kann zum Beispiel die Füllstruktur sein.

In manchen Ausführungsformen kann die Steuervorrichtung 110 eingerichtet sein, den Druckvorgang unverändert zu belassen. In diesem Fall kann die Steuervorrichtung 110 eingerichtet sein, anhand der Druckdaten zu ermitteln, zu welchem Zeitpunkt welcher Abschnitt des dreidimensionalen Objekts gedruckt wird. Beispielsweise kann die Steuervorrichtung 110 ermitteln, ob zu einem bestimmten Zeitpunkt ein Sichtbar-Bereich oder ein Nicht-Sichtbar-Bereich (z.B. eine Füllstruktur) des dreidimensionalen Objekts gedruckt wird. Die Steuervorrichtung 110 kann eingerichtet sein, anhand der Druckdaten und der Filament-Informationen 107 einen Zeitpunkt zum Wechseln der Filamentspule 102 zu ermitteln. Die Steuervorrichtung 110 kann eingerichtet sein, den Zeitpunkt derart zu ermitteln, dass zu diesem Zeitpunkt ein Nicht-Sichtbar-Bereich des dreidimensionalen Objekts gedruckt wird. Wird ein Nicht-Sichtbar-Bereich des dreidimensionalen Objekts gedruckt, so ist der Druckkopf in einem Nicht-Sichtbar-Druckbereich. Der Druckvorgang kann dann zu diesem Zeitpunkt (an dem der Druckkopf in dem Nicht-Sichtbar-Bereich des dreidimensionalen Objekts ist) pausiert werden.

Gemäß verschiedenen Ausführungsformen kann eine Strecke zwischen den ein oder mehreren Detektionsvorrichtungen 105 (z.B. der Lichtschranke 115) und dem Druckkopf und/oder eine Strecke zwischen verschiedenen Detektionsvorrichtungen der ein oder mehreren Detektionsvorrichtungen 115 untereinander bekannt (z.B. in der Speichervorrichtung 112 gespeichert) sein. Die Steuervorrichtung 110 kann eingerichtet sein, eine Menge (z.B. Länge) des verbleibenden Filaments 105 anhand dieser bekannten Strecke(n) zu ermitteln. Zum Beispiel kann die Steuervorrichtung 110, wie hierin beschrieben, anhand einer derzeitigen Geschwindigkeit des Filaments und/oder anhand einer durchschnittlichen Geschwindigkeit des Filaments einen Endzeitpunkt ermitteln, an dem das Filament vollständig verbraucht ist. Es wird verstanden, dass die Steuervorrichtung 110 einen hierin beschriebenen Zeitpunkt zum Wechseln der Filamentspule 102 so ermitteln kann, dass dieser Zeitpunkt vor dem Endzeitpunkt liegt.

Gemäß verschiedenen Ausführungsformen kann die Vorrichtung 100 eine Wechselvorrichtung aufweisen, die eingerichtet ist, die Filamentspule 102 mit einer anderen Filamentspule auszutauschen. Zum Beispiel kann die Steuervorrichtung 110 Steuerdaten an die Wechselvorrichtung bereitzustellen, welche die Wechselvorrichtung anweisen, die Filamentspule 102 mit der anderen Filamentspule (z.B. zu dem ermittelten Zeitpunkt) auszutauschen.

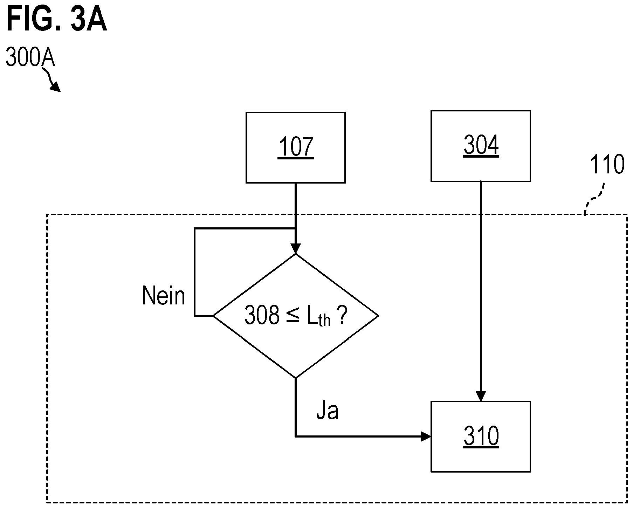

**FIG.3A** zeigt ein beispielhaftes Verarbeitungsschema 300A zum Erzeugen von Steuerdaten 310 gemäß verschiedenen Ausführungsformen. Die Steuerdaten 310 können Anweisungen enthalten, um (z.B., wenn der Druckkopf gerade in einem Sichtbar-Druckbereich des dreidimensionalen Objekts ist) den Druckkopf (z.B. Druckkopf 402) in den Nicht-Sichtbar-Druckbereich zu bewegen dort zu pausieren. Die Steuerdaten 310 können Anweisungen enthalten, um (z.B., wenn der Druckkopf schon in einem Nicht-Sichtbar-Druckbereich des dreidimensionalen Objekts ist) den Druckvorgang in dem Nicht-Sichtbar-Druckbereich zu pausieren. Gemäß verschiedenen Ausführungsformen kann die Steuervorrichtung 110 anhand der Druckdaten 304 ermitteln, ob der Druckkopf zu einem bestimmten Zeitpunkt in einem Sichtbar-Druckbereich oder einem Nicht-Sichtbar-Druckbereich ist.

In manchen Ausführungsformen kann die Steuervorrichtung 110 den Druckkopf selbst bewegen, um diesen in den Nicht-Sichtbar-Druckbereich zu bewegen. Zum Beispiel kann eine Antriebseinheit eingerichtet sein, den Druckkopf zu bewegen und die Steuervorrichtung 110 kann die Steuerdaten 310 an die Antriebseinheit bereitstellen. In manchen Ausführungsformen kann die Steuervorrichtung 110 das dreidimensionale Objekt bewegen, um den Druckkopf in den Nicht-Sichtbar-Druckbereich zu bewegen. Zum Beispiel kann der Druckkopf eingerichtet sein, das dreidimensionale Objekt auf einem Druckbett zu drucken, eine Antriebseinheit kann eingerichtet sein, das Druckbett zu bewegen, und die Steuervorrichtung 110 kann eingerichtet sein, die Steuerdaten 310 an die Antriebseinheit bereitzustellen, um das Druckbett relativ zu dem Druckkopf zu bewegen.

Die Steuerdaten 310 können optional Anweisungen aufweisen, den Druckkopf beim Pausieren in die Parkposition zu bewegen.

Wie hierin beschrieben, kann die Steuervorrichtung 110 anhand der Filament-Informationen 107 ermitteln, ob eine Menge 308 (z.B. eine Länge) des verbleibenden Filaments 104 kleiner als oder gleich dem vordefinierten Filament-Schwellenwert, Lₜₕ, ist. Die Steuervorrichtung 110 kann eingerichtet sein, wenn ermittelt wird, dass die Menge 308 des verbleibenden Filaments 104 kleiner als oder gleich dem vordefinierten Filament-Schwellenwert, Lₜₕ , ist, die Steuerdaten 310 zu erzeugen zum Bewegen des Druckkopfes in den Nicht-Sichtbar-Druckbereich für den Wechsel der Filamentspule 102 (z.B. wenn dieser noch nicht in einem Nicht-Sichtbar-Druckbereich ist und/oder wenn der hierin beschriebene Zeitpunkt zum Wechseln der Filamentspule ermittelt wird) und anschließenden pausieren des Druckvorgangs oder zum direkten Pausieren des Druckvorgangs, wenn der Druckkopf schon in einem Nicht-Sichtbar-Druckbereich des dreidimensionalen Objekts ist.

Die Steuervorrichtung 110 kann die Steuerdaten 310 anhand von Druckdaten 304 erzeugen. Die Druckdaten 304 liefern Informationen darüber, ob ein bestimmter Bereich des dreidimensionalen Objekts ein Sichtbar-Bereich (in manchen Aspekten als Sichtbar-Druckbereich bezeichnet) oder ein Nicht-Sichtbar-Bereich (in manchen Aspekten als Nicht-Sichtbar-Druckbereich bezeichnet) ist.

Gemäß verschiedenen Ausführungsformen kann die Steuervorrichtung 110 eingerichtet sein, zu ermitteln, ob das Bewegen des Druckkopfes in den Nicht-Sichtbar-Druckbereich möglich ist, bevor das verbleibende Filament 104 vollständig verbraucht ist. Die Steuervorrichtung 110 kann dann die Steuerdaten 310 zum Bewegen des Druckkopfes in den Nicht-Sichtbar-Druckbereich erzeugen, sofern diese ermittelt, dass dies ausgehend von der Menge 308 des verbleibenden Filaments 104 möglich ist. Ermittelt die Steuervorrichtung 110, dass das Bewegen des Druckkopfes in den Nicht-Sichtbar-Druckbereich nicht möglich ist bevor das verbleibende Filament 104 verbraucht ist, kann diese eingerichtet sein, den Wechsel der Filamentspule 102 auch in einem Sichtbar-Bereich des dreidimensionalen Objekts zu initiieren.

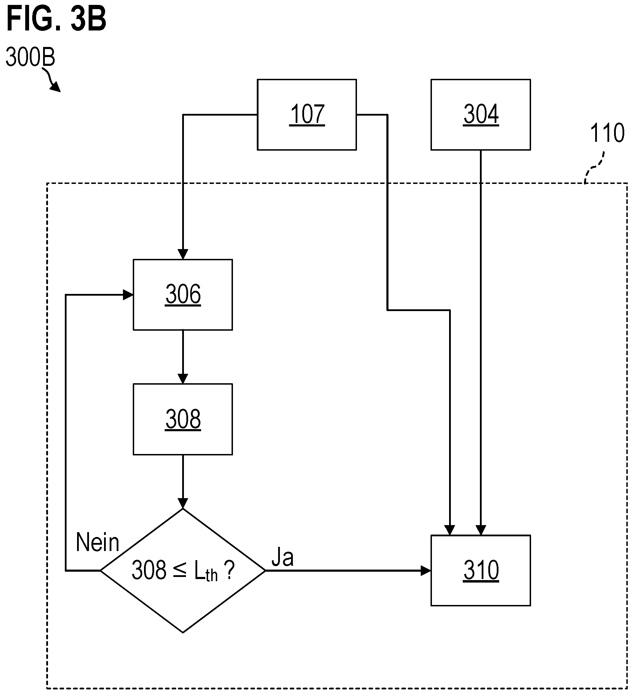

Wie hierin beschrieben, können die ein oder mehreren Detektionsvorrichtungen 105 (z.B. die erste Detektionsvorrichtung 114 und/oder die zweite Detektionsvorrichtung 116) eingerichtet sein, kontinuierlich einen detektierten Geschwindigkeitswert an die Steuervorrichtung 110 als Filament-Informationen 107 bereitzustellen. **FIG.3B** zeigt ein diesbezügliches Verarbeitungsschema 300B beispielhaft dafür, dass genau eine Detektionsvorrichtung (z.B. die erste Detektionsvorrichtung 114 oder die zweite Detektionsvorrichtung 116) kontinuierlich einen Geschwindigkeitswert bereitstellt. Es wird verstanden, dass die Detektionsvorrichtung auch dynamisch mehrere nacheinander erfasste Geschwindigkeitswerte bereitstellen kann. Es wird ebenfalls verstanden, dass die ein oder mehreren Detektionsvorrichtungen 105 auch mehr als eine Detektionsvorrichtung (z.B. die erste Detektionsvorrichtung 114 und die zweite Detektionsvorrichtung 116) aufweisen kann. In diesem Fall kann die Steuervorrichtung 110 eingerichtet sein, die Steuerdaten 310 anhand der jeweils ermittelte Geschwindigkeitswerte der mehreren Detektionsvorrichtungen ermitteln. Die Steuervorrichtung 110 kann eingerichtet sein, anhand des detektierten Geschwindigkeitswert eine absolut zurückgelegte Strecke 306 des Filaments für den Zeitpunkt, an dem der Geschwindigkeitswert detektiert wurde, zu ermitteln. Gemäß verschiedenen Ausführungsformen kann die Steuervorrichtung 110 eingerichtet sein, anhand der ermittelten absolut zurückgelegten Strecke 306 des Filaments die Menge (z.B. Länge) 308 des verbleibenden Filaments 104 zu ermitteln (z.B. unter Verwendung einer in der Speichervorrichtung 112 gespeicherten Gesamt-Menge (z.B. Gesamtlänge) des Filaments der Filamentspule 102).

Gemäß verschiedenen Ausführungsformen können die Steuerdaten 310 einen Zeitpunkt aufweisen, an dem die Filamentspule 102 mit einer anderen Filamentspule ausgetauscht werden soll. Gemäß verschiedenen Ausführungsformen kann die Steuervorrichtung 110 eingerichtet sein, den Zeitpunkt derart zu ermitteln, dass zu diesem Zeitpunkt ein Nicht-Sichtbar-Bereich des dreidimensionalen Objekts gedruckt wird (also ob der Druckkopf in einem Nicht-Sichtbar-Druckbereich ist). Wie hierin beschrieben, kann die Steuervorrichtung 110 anhand der Druckdaten 304 ermitteln, ob zu einem bestimmten Zeitpunkt ein Sichtbar-Bereich (z.B. ein Oberflächenbereich) oder ein Nicht-Sichtbar-Bereich (z.B. die Füllstruktur) gedruckt wird. Die Steuervorrichtung 110 kann eingerichtet sein, den Zeitpunkt zu ermitteln, wenn die ermittelte Menge 308 des verbleibenden Filaments 104 kleiner als oder gleich einem vordefinierten Filament-Schwellenwert, Lₜₕ, ist. Anschaulich kann der Filament-Schwellenwert, Lₜₕ, angeben, ob sich das Filament dem Ende neigt und falls dies der Fall ist, kann die Steuervorrichtung 110 den Zeitpunkt zum Wechseln der Filamentspule 102 ermitteln. Zum Beispiel kann die Steuervorrichtung 110 eingerichtet sein, anhand der detektierten Geschwindigkeit (z.B. eines derzeit ermittelten Geschwindigkeitswerts oder eines durchschnittlichen Geschwindigkeitswerts) und der Menge 308 des verbleibenden Filaments 104 einen Endzeitpunkt zu ermitteln, an dem das verbleibende Filament 104 vollständig verbraucht ist und kann basierend darauf den Zeitpunkt so ermitteln, dass dieser vor dem Endzeitpunkt liegt. Gemäß einer anderen Ausführungsformen kann auch die absolut zurückgelegte Strecke 306 direkt mit einem vordefinierten Schwellenwert (z.B. vordefiniert anhand der Gesamt-Menge bzw. Gesamtlänge des Filaments der Filamentspule 102) verglichen werden.

Wie hierin beschrieben, kann die Steuervorrichtung 110 eingerichtet sein, ob der Druckvorgang mit einem anderen Druckkopf fortgesetzt werden kann. In diesem Fall können die Steuerdaten 310 entsprechende Anweisungen zum Steuern des anderen Druckkopfes aufweisen.

**FIG.4** zeigt schematisch ein System 400 zum Drucken dreidimensionaler Objekte in Schichten mittels eines Schmelzschichtverfahrens gemäß verschiedenen Ausführungsformen. Das System 400 kann die Vorrichtung 100 aufweisen. Das System 400 kann einen Druckkopf 402 aufweisen. Wie hierin beschrieben, kann die Vorrichtung 100 eingerichtet sein, das Filament dem Druckkopf 402 zuzuführen. Das System 400 kann ein Druckbett 404 aufweisen. Der Druckkopf 402 kann eingerichtet sein, das (in festem Zustand) zugeführte Filament zu erhitzen (und so in einen viskosen Zustand zu überführen) und das dreidimensionale Objekt (gemäß den vordefinierten Druckdaten 304) mit dem (viskosen) Filamentmaterial auf dem Druckbett 404 zu drucken. Das System 400 kann eine erste Antriebseinheit 406 aufweisen. Die erste Antriebseinheit 406 kann eingerichtet sein, den Druckkopf 402 zumindest in eine x-Richtung und/oder eine y-Richtung (also beispielsweise lateral) zu bewegen. Die erste Antriebseinheit 406 kann auch eingerichtet sein, den Druckkopf 402 in eine z-Richtung (also beispielsweise vertikal) zu bewegen. Das System 400 kann eine zweite Antriebseinheit 408 aufweisen. Die zweite Antriebseinheit 408 kann eingerichtet sein, das Druckbett 404 zumindest in eine z-Richtung (also beispielsweise vertikal) zu bewegen. Die zweite Antriebseinheit 408 kann auch eingerichtet sein, das Druckbett 404 in eine x-Richtung und/oder eine y-Richtung (also beispielsweise lateral) zu bewegen. Die Steuervorrichtung 110 der Vorrichtung 100 kann eingerichtet sein, die erste Antriebseinheit 406 und/oder die zweite Antriebseinheit 408 (z.B. gemäß den Druckdaten 304) zu steuern. Zum Beispiel kann die Steuervorrichtung 110 eingerichtet sein, die Steuerdaten 310 an die erste Antriebseinheit 406 und/oder die zweite Antriebseinheit 408 bereitzustellen und die Steuerdaten 310 können Instruktionen aufweisen, um den Druckkopf 402 in einen Nicht-Sichtbar-Druckbereich des dreidimensionalen Objekts zu bewegen. Es wird verstanden, dass der Druckkopf 402 in den Nicht-Sichtbar-Druckbereich bewegt werden kann, indem der Druckkopf 402 selbst bewegt wird und/oder indem das Druckbett 404 (relativ zu dem Druckkopf 402) bewegt wird.

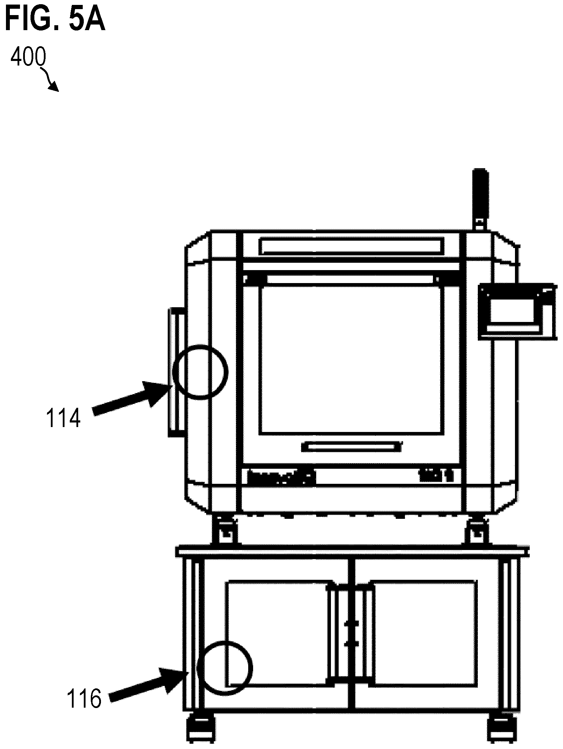

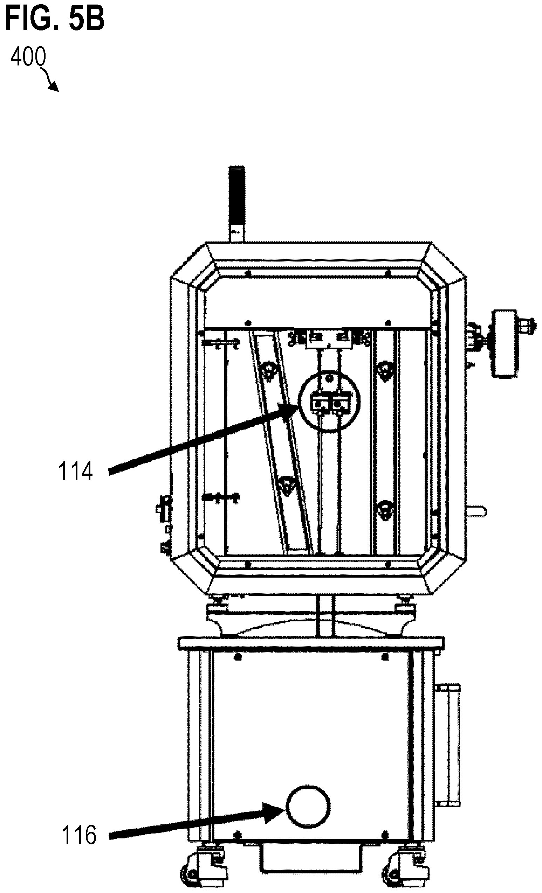

Optional kann das System 400 eine Energieversorgungseinheit 410 zum Bereitstellen der Energie der anderen Komponenten aufweisen. **FIG.5A** eine Vorderansicht und **FIG.5B** eine Seitenansicht einer beispielhaften räumlichen Ausgestaltung des Systems 400 gemäß verschiedenen Ausführungsformen.

Obgleich der Druckkopf 402, das Druckbett 404, die erste Antriebseinheit 406 und die zweite Antriebseinheit 408 als Teil des Systems 400 beschrieben werden, wird verstanden, dass eine oder mehrere (z.B. alle) dieser Komponenten auch Teil der Vorrichtung 100 selbst sein können. Folglich kann in manchen Ausführungsformen die Vorrichtung 100 den Druckkopf 402 und/oder das Druckbett 404 und/oder die erste Antriebseinheit 406 und/oder die zweite Antriebseinheit 408 aufweisen.

Es wird verstanden, dass eine hierin beschriebe Antriebseinheit zum Bewegen des Druckbettes 402 und/oder eines Druckkopfes (z.B. des Druckkopfes 402 und/oder des anderen Druckkopfes) mehrere Einheiten (z.B. jeweils mindestens einen Motor aufweisend) aufweisen kann, wobei jede Einheit der mehreren Einheiten eingerichtet sein kann, eine Bewegung in mindestens eine Richtung realisieren können.

Gemäß verschiedenen Ausführungsformen kann die Vorrichtung 100 und/oder das System 400 mehr als einen Druckkopf (z.B. auch den hierin beschriebenen anderen Druckkopf) aufweisen. In diesem Fall kann die Vorrichtung 100 und/oder das System 400 für jeden zusätzlichen Druckkopf eine zugehörige Antriebseinheit aufweisen, welche eingerichtet ist, den j eweiligen zusätzlichen Druckkopf lateral (z.B. in x-Richtung und/oder in y-Richtung) und/oder vertikal (z.B. in z-Richtung) zu bewegen.

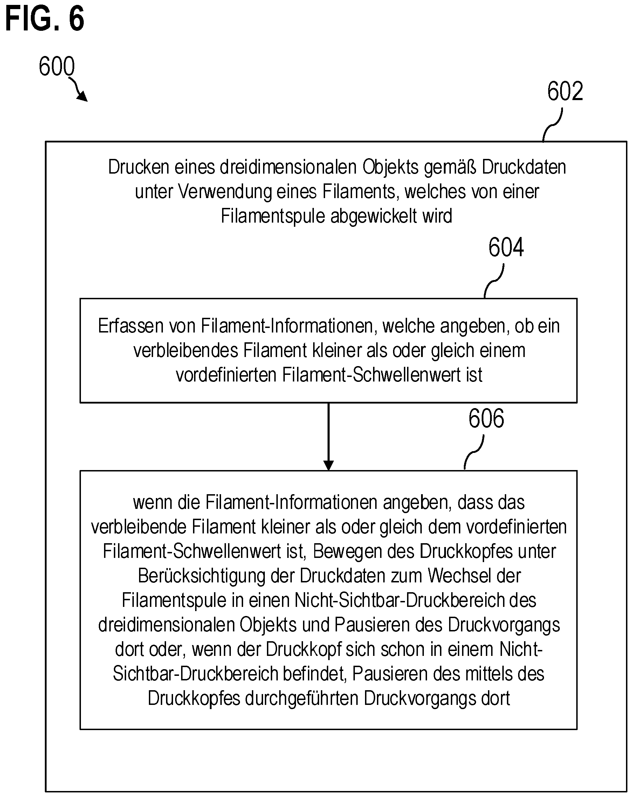

**FIG.6** zeigt ein Flussdiagramm eines Verfahrens 600 zum Wechseln einer Filamentspule während des Druckens eines dreidimensionalen Objekts gemäß verschiedenen Ausführungsformen.

Das Verfahren 600 kann ein Drucken eines dreidimensionalen Objekts gemäß Druckdaten unter Verwendung eines Filaments, welches von einer Filamentspule abgewickelt wird, aufweisen (in 602).

Das Verfahren 600 kann während des Druckens (602) des dreidimensionalen Objekts ein Erfassen von Filament-Informationen aufweisen (in 604). Die Filament-Informationen können angeben, ob ein verbleibendes Filament (z.B. eine Menge des verbleibenden Filaments 104) kleiner als oder gleich einem vordefinierten Filament-Schwellenwert ist.

Das Verfahren 600 kann, wenn die Filament-Informationen angeben, dass das verbleibende Filament kleiner als oder gleich dem vordefinierten Filament-Schwellenwert ist, während des Druckens (602) des dreidimensionalen Objekts ein Bewegen des Druckkopfes in einen Nicht-Sichtbar-Bereich des dreidimensionalen Objekts und ein Pausieren des Druckvorgangs zum Wechseln der Filamentspule aufweisen (in 606). Dies kann unter Berücksichtigung der Druckdaten erfolgen. Befindet sich der Druckkopf, wenn die Filament-Informationen angeben, dass das verbleibende Filament kleiner als oder gleich dem vordefinierten Filament-Schwellenwert ist, schon in einem Nicht-Sichtbar-Druckbereich des dreidimensionalen Objekts, so kann das Verfahren 600 (in 606) ein Pausieren des Druckvorgangs in diesem Nicht-Sichtbar-Druckbereich aufweisen.

Gemäß verschiedenen Ausführungsformen kann das Verfahren 600 (z.B. in 606) ein Ermitteln, ob der Druckkopf in einem Nicht-Sichtbar-Druckbereich ist, aufweisen. Wird ermittelt, dass der Druckkopf in einem Nicht-Sichtbar-Druckbereich ist, so kann das Verfahren 600 das Pausieren des Druckvorgangs in diesem Nicht-Sichtbar-Druckbereich aufweisen. Wird ermittelt, dass der Druckkopf nicht in einem Nicht-Sichtbar-Druckbereich (also in einem Sichtbar-Druckbereich) ist, so kann das Verfahren 600 das Bewegen des Druckkopfes in einen Nicht-Sichtbar-Bereich des dreidimensionalen Objekts und das Pausieren des Druckvorgangs in diesem Nicht-Sichtbar-Bereich zum Wechseln der Filamentspule aufweisen.

Es wird verstanden, dass das Erfassen der Filament-Informationen (in 604) und das Bewegen des Druckkopfes (in 606) wie für die Vorrichtung 100 beschrieben erfolgen kann.

Im Folgenden werden Bespiele beschrieben, welche verschiedene Aspekte der Vorrichtung 100, des Systems 400, und des Verfahrens 600 veranschaulichen. Es wird verstanden, dass Aspekte, die in Bezug auf die Vorrichtung 100 beschrieben werden, auch entsprechende Aspekte des Verfahrens 600 charakterisieren können bzw. entsprechende Operationen als Verfahren ausgeführt werden können, und vice versa (also, dass entsprechende Komponenten der Vorrichtung eingerichtet sein können zumindest einen Teil des Verfahrens 600 durchzuführen. Dementsprechend wird verstanden, dass das System 400 die Vorrichtung 100 aufweisen kann und zumindest einen Teil des Verfahrens 600 durchführen kann.

Beispiel 1 ist eine Vorrichtung zum Wechseln einer Filamentspule während des Druckens eines dreidimensionalen Objekts, die Vorrichtung aufweisend: eine Filamentspule auf der ein Filament aufgewickelt ist; eine Antriebsvorrichtung, die einen Motor aufweist, welcher eingerichtet ist, das Filament anzutreiben, um das Filament von der Filamentspule abzuwickeln und zum Drucken eines dreidimensionalen Objekts gemäß Druckdaten an einen Druckkopf bereitzustellen, und eine Steuervorrichtung, die eingerichtet ist: Filament-Informationen zu empfangen, welche angeben, ob ein verbleibendes Filament kleiner als oder gleich einem vordefinierten Filament-Schwellenwert ist, und wenn die Filament-Informationen angeben, dass das verbleibende Filament kleiner als oder gleich dem vordefinierten Filament-Schwellenwert ist, unter Berücksichtigung der Druckdaten Steuerdaten zu erzeugen, um den Druckkopf zum Wechseln der Filamentspule in einen Nicht-Sichtbar-Druckbereich des dreidimensionalen Objekts zu bewegen und dort den Druckvorgang zu pausieren oder, wenn der Druckkopf sich schon in einem Nicht-Sichtbar-Druckbereich befindet, dort den mittels des Druckkopfes durchgeführten Druckvorgang zu pausieren.

Beispiel 2 ist eingerichtet gemäß Beispiel 1, wobei die Steuervorrichtung ferner eingerichtet ist, bei Pausieren des Druckvorgangs den Druckkopf in eine vorgegebene Parkposition zu bewegen (z.B. außerhalb des Druckbereiches und/oder außerhalb des dreidimensionalen Objekts).

Beispiel 3 ist eingerichtet gemäß Beispiel 2, wobei die Steuervorrichtung ferner eingerichtet ist: zu ermitteln, ob einem anderen Druckkopf ein von einer anderen Filamentspule abgewickeltes Filament (z.B. gleichen Materials wie das Filament der Filamentspule 102) zur Verfügung steht, und wenn ermittelt wird, dass einem anderen Druckkopf ein von einer anderen Filamentspule abgewickeltes Filament zur Verfügung steht, bei Pausieren des Druckvorgangs den anderen Druckkopf in den Nicht-Sichtbar-Druckbereich des dreidimensionalen Objekts zu bewegen und dort den Druckvorgang fortzusetzen.

Beispiel 4 ist eine Vorrichtung gemäß einem der Beispiele 1 bis 3, wobei die Filament-Informationen eine Zugspannung und/oder Druckspannung des verbleibenden Filaments aufweisen; und/oder wobei die Filament-Informationen angeben, dass ein Ende des Filaments eine Detektionsvorrichtung passiert hat; und/oder wobei die Filament-Informationen angeben, dass eine optische und/oder mechanische Markierung des Filaments eine Detektionsvorrichtung passiert hat; und/oder wobei die Filament-Informationen ein Gewicht der Filamentspule aufweisen.

Beispiel 5 ist eingerichtet gemäß einem der Beispiele 1 bis 4, wobei die Steuervorrichtung eingerichtet ist: anhand der Filament-Informationen eine Länge des verbleibenden Filaments zu ermitteln, und zu ermitteln, dass das verbleibende Filament kleiner als oder gleich dem vordefinierten Filament-Schwellenwert ist, wenn die Länge des verbleibenden Filaments kleiner als oder gleich einem vordefinierten Längen-Schwellenwert ist.

Beispiel 6 ist eine Vorrichtung gemäß einem der Beispiele 1 bis 4, ferner aufweisend: eine oder mehrere Detektionsvorrichtungen, die eingerichtet sind, die Filament-Informationen zu erfassen und an die Steuervorrichtung bereitzustellen.

Beispiel 7 ist eingerichtet gemäß Beispiel 6, wobei mindestens eine Detektionsvorrichtung der ein oder mehreren Detektionsvorrichtungen eingerichtet ist, permanent eine Geschwindigkeit des von der Filamentspule abgewickelten Filaments zu detektieren und als Filament-Informationen an die Steuervorrichtung bereitzustellen; und wobei die Steuervorrichtung eingerichtet ist: eine zurückgelegte Strecke des von der Filamentspule abgewickelten Filaments unter Verwendung der detektierten Geschwindigkeit zu ermitteln, und anhand der ermittelten zurückgelegten Strecke des von der Filamentspule abgewickelten Filaments das verbleibende Filament zu ermitteln.

Beispiel 8 ist eingerichtet gemäß Beispiel 7, wobei die Steuervorrichtung eingerichtet ist: anhand der Filament-Informationen und anhand eines derzeit detektierten Geschwindigkeitswerts und/oder eines als Durchschnitt mehrerer Geschwindigkeitswerte der detektierten Geschwindigkeit ermittelten durchschnittlichen Geschwindigkeitswerts einen erwarteten Endzeitpunkt zu ermitteln, an dem das verbleibende Filament vollständig verbrauchst ist, und einen Zeitpunkt zum Bewegen des Druckkopfes in den Nicht-Sichtbar-Druckbereich des dreidimensionalen Objekts derart zu ermitteln, dass dieser Zeitpunkt zeitlich vor dem erwarteten Endzeitpunkt liegt.

Beispiel 9 ist eine Vorrichtung gemäß einem der Beispiele 6 bis 8, wobei die ein oder mehreren Detektionsvorrichtungen aufweisen: einen Inkrementalgeber zum Detektieren einer Geschwindigkeit des von der Filamentspule abgewickelten Filaments; und/oder eine mechanische und/oder optische Detektionsvorrichtung (z.B. einen Taster, einen Druckschalter mit Wippe, eine Lichtschranke, etc.) zum Detektieren eines Endes des Filaments; und/oder eine mechanische und/oder optische Detektionsvorrichtung zum Detektieren einer optischen und/oder mechanischen Markierung des Filaments.

Beispiel 10 ist eingerichtet gemäß einem der Beispiele 1 bis 9, wobei die Steuervorrichtung eingerichtet ist, die erzeugten Steuerdaten an eine Antriebseinheit des Druckkopfes und/oder eine Antriebseinheit eines Druckbetts, auf welchem das dreidimensionale Objekt gedruckt wird, bereitzustellen, um den Druckkopf zum Wechseln der Filamentspule in den Nicht-Sichtbar-Druckbereich des dreidimensionalen Objekts zu bewegen und dort den Druckvorgang zu pausieren bzw., wenn der Druckkopf sich schon in dem Nicht-Sichtbar-Druckbereich befindet, dort den mittels des Druckkopfes durchgeführten Druckvorgang zu pausieren.

Beispiel 11 ist eingerichtet gemäß Beispiel 10, wobei die an die Antriebseinheit des Druckkopfes und/oder die Antriebseinheit des Druckbetts bereitgestellten Steuerdaten diese anweisen, den Druckkopf bei Pausieren des Druckvorgangs in eine vorgegebene Parkposition zu bewegen.

Beispiel 12 ist eine Vorrichtung gemäß einem der Beispiele 1 bis 11, ferner aufweisend: eine Wechselvorrichtung, die eingerichtet ist, bei Pausieren des Druckvorgangs (z.B., wenn der Druckkopf in der vorgegebenen Parkposition ist) die Filamentspule mit einer anderen Filamentspule auszutauschen.

Beispiel 13 ist ein System zum Drucken dreidimensionaler Objekte, aufweisend: eine Vorrichtung gemäß einem der Beispiele 1 bis 12; und den Druckkopf, der eingerichtet ist, das dreidimensionale Objekt gemäß den Druckdaten unter Verwendung des von der Filamentspule abgewickelten Filaments zu drucken.

In Beispiel 14 kann das System gemäß Beispiel 13 optional ferner aufweisen: ein Druckbett, wobei der Druckkopf eingerichtet ist, das dreidimensionale Objekt auf dem Druckbett zu drucken; eine erste Antriebseinheit, die eingerichtet ist, den Druckkopf zumindest in eine x-Richtung und eine y-Richtung zu bewegen; und eine zweite Antriebseinheit, die eingerichtet ist, das Druckbett zumindest in eine z-Richtung zu bewegen; wobei die Steuervorrichtung der Vorrichtung eingerichtet ist, die erste Antriebseinheit und die zweite Antriebseinheit zu steuern.

Beispiel 15 ist ein Verfahren zum Wechseln einer Filamentspule während des Druckens eines dreidimensionalen Objekts, das Verfahren aufweisend: Drucken des dreidimensionalen Objekts gemäß Druckdaten unter Verwendung eines Filaments, welches von einer Filamentspule abgewickelt wird; während des Druckens des dreidimensionalen Objekts: Erfassen von Filament-Informationen, welche angeben, ob ein verbleibendes Filament kleiner als oder gleich einem vordefinierten Filament-Schwellenwert ist, und wenn die Filament-Informationen angeben, dass das verbleibende Filament kleiner als oder gleich dem vordefinierten Filament-Schwellenwert ist, Bewegen des Druckkopfes unter Berücksichtigung der Druckdaten zum Wechsel der Filamentspule in einen Nicht-Sichtbar-Druckbereich des dreidimensionalen Objekts und Pausieren des Druckvorgangs dort oder, wenn der Druckkopf sich schon in einem Nicht-Sichtbar-Druckbereich befindet, Pausieren des mittels des Druckkopfes durchgeführten Druckvorgangs dort.

In Beispiel 16 kann das Verfahren gemäß Beispiel 15 optional ferner aufweisen: bei Pausieren des Druckvorgangs, Bewegen des Druckkopfes in eine vorgegebene Parkposition.

In Beispiel 17 kann das Verfahren gemäß Beispiel 16 optional ferner aufweisen: während des Druckens des dreidimensionalen Objekts: Ermitteln, ob einem anderen Druckkopf ein von einer anderen Filamentspule abgewickeltes Filament der zur Verfügung steht, und wenn der Druckkopf in der vorgegebene Parkposition ist und wenn ermittelt wird, dass einem anderen Druckkopf ein von einer anderen Filamentspule abgewickeltes Filament zur Verfügung steht, Bewegen des anderen Druckkopfes in den Nicht-Sichtbar-Druckbereich des dreidimensionalen Objekts und Fortsetzen des Druckvorgang mit dem anderen Druckkopf.

In Beispiel 18 kann das Verfahren gemäß einem der Beispiele 15 bis 17 optional ferner aufweisen: Wechseln der Filamentspule mit einer anderen Filamentspule während der Druckkopf in dem Nicht-Sichtbar-Druckbereich des dreidimensionalen Objekts ist.

In Beispiel 19 kann das Verfahren gemäß Beispiel 16 oder 17 optional ferner aufweisen: Wechseln der Filamentspule mit einer anderen Filamentspule während der Druckkopf in der Parkposition ist.

Beispiel 20 ist das Verfahren gemäß einem der Beispiele 15 bis 19, wobei das Erfassen der Filament-Informationen aufweist: Erfassen einer Zugspannung und/oder einer Druckspannung des Filaments; und/oder Erfassen eines Gewichts der Filamentspule; und/oder Erfassen einer mechanischen und/oder optischen Markierung des Filaments; und/oder Erfassen eines Endes des verbleibenden Filaments.

Beispiel 21 ist das Verfahren gemäß einem der Beispiele 15 bis 20, wobei das Erfassen der Filament-Informationen aufweist: permanentes Detektieren einer Geschwindigkeit, die angibt, mit welcher Geschwindigkeit das Filament von der Filamentspule abgewickelt wird; und wobei das Verfahren ferner aufweist: Ermitteln einer zurückgelegten Strecke des von der Filamentspule abgewickelten Filaments unter Verwendung des detektierten Geschwindigkeitswerts, und Ermitteln des verbleibenden Filaments anhand der ermittelten zurückgelegten Strecke des von der Filamentspule abgewickelten Filaments.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. Der Begriff "verbunden" kann beispielsweise elektrische verbunden bedeuten. In den Figuren werden identische oder ähnliche Elemente mit identischen Bezugszeichen versehen, soweit dies zweckmäßig ist.

Eine "Steuervorrichtung", wie hierin verwendet, kann als jede Art von (z.B. Logik implementierender) Entität verstanden werden, die die Verarbeitung von Daten oder Signalen erlaubt. Die Steuervorrichtung kann beispielsweise eine Verschaltung und/oder (mindestens) einen Prozessor aufweisen, welche/welcher Software ausführen kann, die in einer Speichervorrichtung (in manchen Aspekten auch als Speichermedium bezeichnet), in einer Firmware oder in einer Kombination davon gespeichert ist, und darauf basierend Anweisungen ausgeben kann. Die Steuervorrichtung kann beispielsweise mittels Codesegmenten (z.B. Software) konfiguriert sein, um den Betrieb eines Systems, z.B. eines 3D-Druckers zu steuern. Zum Beispiel können die Daten oder Signale beispielsweise gemäß zumindest einer (d.h. einer oder mehr als einer) spezifischen Funktion behandelt werden, die vom Prozessor ausgeführt wird. Ein Prozessor kann eine analoge Schaltung, eine digitale Schaltung, eine Mischsignalschaltung, eine Logikschaltung, einen Mikroprozessor, eine zentrale Verarbeitungseinheit (CPU), eine Grafikverarbeitungseinheit (GPU), einen digitalen Signalprozessor (DSP), eine programmierbare Gatter-Anordnung (FPGA), eine integrierte Schaltung oder eine beliebige Kombination davon aufweisen oder daraus gebildet sein. Jede andere Art der Implementierung der jeweiligen Funktionen, die hierin ausführlich beschrieben werden, kann auch als Prozessor oder Logikschaltung verstanden werden. Es versteht sich, dass einer oder mehrere der hierin detailliert beschriebenen Verfahrensschritte von einem Prozessor ausgeführt (z.B. realisiert) werden können, durch eine oder mehrere spezifische Funktionen, die von dem Prozessor ausgeführt werden. Der Prozessor kann daher eingerichtet sein, eines der hierin beschriebenen Verfahren oder dessen Komponenten zur Informationsverarbeitung durchzuführen.

Eine "Speichervorrichtung", wie hierin verwendet, kann einen oder mehrere Speicher aufweisen. Ein Begriff "Speicher" kann ein flüchtiger Speicher (z.B. ein DRAM (dynamischer Direktzugriffsspeicher) oder ein nichtflüchtiger Speicher (z.B. ein PROM (programmierbarer Festwertspeicher), ein EPROM (löschbarer PROM), ein EEPROM (elektrisch löschbarer PROM) oder ein Flash-Speicher, wie beispielsweise eine Speichereinrichtung mit schwebendem Gate, eine ladungsabfangende Speichereinrichtung, ein MRAM (magnetoresistiver Direktzugriffsspeicher) oder ein PCRAM (Phasenwechsel-Direktzugriffsspeicher)), sein.

## Patentansprüche

1. Vorrichtung (100) zum Wechseln einer Filamentspule während des Druckens eines dreidimensionalen Objekts, die Vorrichtung (100) aufweisend:
• eine Filamentspule (102) auf der ein Filament (104) aufgewickelt ist;
• eine Antriebsvorrichtung (106), die einen Motor (108) aufweist, welcher eingerichtet ist, das Filament (104) anzutreiben, um das Filament (104) von der Filamentspule (102) abzuwickeln und zum Drucken eines dreidimensionalen Objekts gemäß Druckdaten an einen Druckkopf bereitzustellen, und
• eine Steuervorrichtung (110), die eingerichtet ist:
∘ Filament-Informationen (107) zu empfangen, welche angeben, ob ein verbleibendes Filament kleiner als oder gleich einem vordefinierten Filament-Schwellenwert ist, wobei der vordefinierte Filament-Schwellenwert derart ausgewählt ist, dass, wenn der vordefinierte Filament-Schwellenwert erreicht ist, ausreichend verbleibendes Filament (104) vorhanden ist, um den Druckkopf während des Druckens des dreidimensionalen Objekts aktiv in einen Nicht-Sichtbar-Druckbereich des dreidimensionalen Objekts zu bewegen , und
∘ wenn die Filament-Informationen (107) angeben, dass das verbleibende Filament kleiner als oder gleich dem vordefinierten Filament-Schwellenwert ist, unter Berücksichtigung der Druckdaten (304) Steuerdaten (310) zu erzeugen, um den Druckkopf während des Druckens zum Wechseln der Filamentspule (102) in den Nicht-Sichtbar-Druckbereich des dreidimensionalen Objekts zu bewegen und dort den Druckvorgang zu pausieren.

2. Vorrichtung (100) gemäß Anspruch 1,
wobei die Steuervorrichtung (110) ferner eingerichtet ist, wenn die Filament-Informationen (107) angeben, dass das verbleibende Filament kleiner als oder gleich dem vordefinierten Filament-Schwellenwert ist, unter Berücksichtigung der Druckdaten (304) Steuerdaten (310) zu erzeugen, um den mittels des Druckkopfes durchgeführten Druckvorgang in dem Nicht-Sichtbar-Druckbereich zu pausieren, wenn der Druckkopf sich schon in diesem Nicht-Sichtbar-Druckbereich befindet.

3. Vorrichtung (100) gemäß Anspruch 1 oder 2,
wobei die Steuervorrichtung (110) ferner eingerichtet ist, bei Pausieren des Druckvorgangs den Druckkopf in eine vorgegebene Parkposition zu bewegen;
wobei die Steuervorrichtung (110) vorzugsweise ferner eingerichtet ist:
• zu ermitteln, ob einem anderen Druckkopf ein von einer anderen Filamentspule abgewickeltes Filament zur Verfügung steht, und
• wenn ermittelt wird, dass einem anderen Druckkopf ein von einer anderen Filamentspule abgewickeltes Filament zur Verfügung steht, bei Pausieren des Druckvorgangs den anderen Druckkopf in den Nicht-Sichtbar-Druckbereich des dreidimensionalen Objekts zu bewegen und dort den Druckvorgang fortzusetzen.

4. Vorrichtung (100) gemäß einem der Ansprüche 1 bis 3,
wobei die Steuervorrichtung (110) ferner eingerichtet ist, wenn die Filament-Informationen (107) angeben, dass das verbleibende Filament kleiner als oder gleich dem vordefinierten Filament-Schwellenwert ist, unter Berücksichtigung der Druckdaten (304) Steuerdaten (310) zu erzeugen, um den Druckkopf, wenn sich der Druckkopf in einem Sichtbar-Druckbereich des dreidimensionalen Objekts befindet, zum Wechseln der Filamentspule (102) während des Druckens des dreidimensionalen Objekts in einen Nicht-Sichtbar-Druckbereich des dreidimensionalen Objekts zu bewegen und dort den Druckvorgang zu pausieren oder, wenn der Druckkopf sich schon in einem Nicht-Sichtbar-Druckbereich befindet, dort den mittels des Druckkopfes durchgeführten Druckvorgang zu pausieren.

5. Vorrichtung (100) gemäß einem der Ansprüche 1 bis 4,
• wobei die Filament-Informationen (107) eine Zugspannung und/oder Druckspannung des verbleibenden Filaments (104) aufweisen; und/oder
• wobei die Filament-Informationen (107) angeben, dass ein Ende (109) des verbleibenden Filaments (104) eine Detektionsvorrichtung passiert hat; und/oder
• wobei die Filament-Informationen (107) angeben, dass eine optische und/oder mechanische Markierung des verbleibenden Filaments eine Detektionsvorrichtung passiert hat; und/oder
• wobei die Filament-Informationen (107) ein Gewicht der Filamentspule (102) aufweisen.

6. Vorrichtung (100) gemäß einem der Ansprüche 1 bis 5,
wobei die Steuervorrichtung (110) eingerichtet ist:
• anhand der Filament-Informationen (107) eine Menge des verbleibenden Filaments (104) zu ermitteln, und
• zu ermitteln, dass das verbleibende Filament (104) kleiner als oder gleich dem vordefinierten Filament-Schwellenwert ist, wenn die Menge des verbleibenden Filaments (104) kleiner als oder gleich einem vordefinierten Mengen-Schwellenwert ist.

7. Vorrichtung (100) gemäß einem der Ansprüche 1 bis 6, ferner aufweisend:
eine oder mehrere Detektionsvorrichtungen (105), die eingerichtet sind, die Filament-Informationen (107) zu erfassen und an die Steuervorrichtung (110) bereitzustellen,
wobei vorzugsweise mindestens eine Detektionsvorrichtung (105, 114, 116) der ein oder mehreren Detektionsvorrichtungen (105, 114, 116) eingerichtet ist, permanent eine Geschwindigkeit des von der Filamentspule (102) abgewickelten Filaments zu detektieren und als Filament-Informationen (107) an die Steuervorrichtung (110) bereitzustellen; und
wobei die Steuervorrichtung (110) eingerichtet ist:
∘ eine zurückgelegte Strecke des von der Filamentspule (102) abgewickelten Filaments unter Verwendung der detektierten Geschwindigkeit zu ermitteln, und
∘ anhand der ermittelten zurückgelegten Strecke des von der Filamentspule (102) abgewickelten Filaments das verbleibende Filament (104) zu ermitteln,
wobei weiterhin vorzugsweise die Steuervorrichtung (110) eingerichtet ist:
- anhand der Filament-Informationen (107) und anhand eines derzeit detektierten Geschwindigkeitswerts und/oder eines als Durchschnitt mehrerer Geschwindigkeitswerte der detektierten Geschwindigkeit ermittelten durchschnittlichen Geschwindigkeitswerts einen erwarteten Endzeitpunkt zu ermitteln, an dem das verbleibende Filament (104) vollständig verbraucht ist, und
- einen Zeitpunkt zum Bewegen des Druckkopfes in den Nicht-Sichtbar- Druckbereich des dreidimensionalen Objekts derart zu ermitteln, dass dieser Zeitpunkt zeitlich vor dem erwarteten Endzeitpunkt liegt.

8. Vorrichtung (100) gemäß Anspruch 7,
wobei die ein oder mehreren Detektionsvorrichtungen (105, 114, 116) aufweisen:
• einen Inkrementalgeber zum Detektieren einer Geschwindigkeit des von der Filamentspule (102) abgewickelten Filaments; und/oder
• eine mechanische und/oder optische Detektionsvorrichtung zum Detektieren eines Endes (109) des verbleibenden Filaments (104); und/oder
• eine mechanische und/oder optische Detektionsvorrichtung zum Detektieren einer optischen und/oder mechanischen Markierung des verbleibenden Filaments (104).

9. Vorrichtung (100) gemäß einem der Ansprüche 1 bis 8,
wobei die Steuervorrichtung (110) eingerichtet ist, die erzeugten Steuerdaten (310) an eine Antriebseinheit des Druckkopfes und/oder eine Antriebseinheit eines Druckbetts, auf welchem das dreidimensionale Objekt gedruckt wird, bereitzustellen, um den Druckkopf zum Wechseln der Filamentspule (102) in den Nicht-Sichtbar-Druckbereich des dreidimensionalen Objekts zu bewegen und dort den Druckvorgang zu pausieren bzw., wenn der Druckkopf sich schon in dem Nicht-Sichtbar-Druckbereich befindet, dort den mittels des Druckkopfes durchgeführten Druckvorgang zu pausieren;
wobei vorzugsweise die an die Antriebseinheit des Druckkopfes und/oder die Antriebseinheit des Druckbetts bereitgestellten Steuerdaten (310) diese anweisen, den Druckkopf bei Pausieren des Druckvorgangs in eine vorgegebene Parkposition zu bewegen.

10. Vorrichtung (100) gemäß einem der Ansprüche 1 bis 9, ferner aufweisend:
eine Wechselvorrichtung, die eingerichtet ist, bei Pausieren des Druckvorgangs die Filamentspule (102) mit einer anderen Filamentspule auszutauschen.

11. System (400) zum Drucken dreidimensionaler Objekte, aufweisend:
• eine Vorrichtung (100) gemäß einem der Ansprüche 1 bis 10; und
• den Druckkopf (402), der eingerichtet ist, das dreidimensionale Objekt gemäß den Druckdaten unter Verwendung des von der Filamentspule (102) abgewickelten Filaments zu drucken.

12. System (400) gemäß Anspruch 11, ferner aufweisend:
• ein Druckbett (404), wobei der Druckkopf (402) eingerichtet ist, das dreidimensionale Objekt auf dem Druckbett (404) zu drucken;
• eine erste Antriebseinheit (406), die eingerichtet ist, den Druckkopf (402) zumindest in eine x-Richtung und eine y-Richtung zu bewegen; und
• eine zweite Antriebseinheit (408), die eingerichtet ist, das Druckbett (310) zumindest in eine z-Richtung zu bewegen;
• wobei die Steuervorrichtung (110) der Vorrichtung (100) eingerichtet ist, die erste Antriebseinheit (406) und die zweite Antriebseinheit (408) zu steuern.

13. Verfahren (600) zum Wechseln einer Filamentspule während des Druckens eines dreidimensionalen Objekts mittels des Systems aus Anspruch 12, das Verfahren aufweisend:
• Drucken des dreidimensionalen Objekts gemäß Druckdaten unter Verwendung eines Filaments, welches von einer Filamentspule abgewickelt wird (602);
• während des Druckens (602) des dreidimensionalen Objekts:
∘ Erfassen von Filament-Informationen, welche angeben, ob ein verbleibendes Filament kleiner als oder gleich einem vordefinierten Filament-Schwellenwert ist (604), wobei der vordefinierte Filament-Schwellenwert derart ausgewählt ist, dass, wenn der vordefinierte Filament-Schwellenwert erreicht ist, ausreichend verbleibendes Filament (104) vorhanden ist, um einen Druckkopf während des Druckens des dreidimensionalen Objekts aktiv in einen Nicht-Sichtbar-Druckbereich des dreidimensionalen Objekts zu bewegen, und
∘ wenn die Filament-Informationen angeben, dass das verbleibende Filament kleiner als oder gleich dem vordefinierten Filament-Schwellenwert ist, wenn sich der Druckkopf in einem Sichtbar-Druckbereich des dreidimensionalen Objekts befindet, Bewegen des Druckkopfes unter Berücksichtigung der Druckdaten während des Druckens des dreidimensionalen Objekts zum Wechsel der Filamentspule in den Nicht-Sichtbar-Druckbereich des dreidimensionalen Objekts und Pausieren des Druckvorgangs dort.

14. Verfahren (600) gemäß Anspruch 13 ferner aufweisend:
bei Pausieren des Druckvorgangs, Bewegen des Druckkopfes in eine vorgegebene Parkposition;
vorzugsweise das Verfahren ferner aufweisend:
während des Druckens (602) des dreidimensionalen Objekts:
• Ermitteln, ob einem anderen Druckkopf ein von einer anderen Filamentspule abgewickeltes Filament zur Verfügung steht, und
• wenn der Druckkopf in der vorgegebenen Parkposition ist und wenn ermittelt wird, dass einem anderen Druckkopf ein von einer anderen Filamentspule abgewickeltes Filament zur Verfügung steht, Bewegen des anderen Druckkopfes in den Nicht-Sichtbar-Druckbereich des dreidimensionalen Objekts und Fortsetzen des Druckvorgangs mit dem anderen Druckkopf.

## Claims

1. Apparatus (100) for changing a filament spool during the printing of a three-dimensional object, the apparatus (100) comprising:
• a filament spool (102), on which a filament (104) is wound;
• a drive apparatus (106) comprising a motor (108), which is configured to drive the filament (104) in order to unwind the filament (104) from the filament spool (102) and to provide it to a printhead for printing a three-dimensional object according to printing data; and
• a control unit (110), which is configured:
∘ to receive filament information (107), which indicates whether a remaining filament is less than or equal to a predefined filament threshold value, wherein the predefined filament threshold value is selected such that when the predefined filament threshold value is reached, sufficient remaining filament (104) is present to actively move the printhead into a nonvisible printing area of the three-dimensional object during the printing of the three-dimensional object, and
∘ if the filament information (107) indicates that the remaining filament is less than or equal to the predefined filament threshold value, to generate control data (310) in consideration of the printing data (304), in order to move the printhead into the nonvisible printing area of the three-dimensional object during the printing to change the filament spool (102) and to pause the printing procedure there.

2. Apparatus (100) according to Claim 1,
wherein the control unit (110) is furthermore configured, if the filament information (107) indicates that the remaining filament is less than or equal to the predefined filament threshold value, to generate control data (310) in consideration of the printing data (304), in order to pause the printing procedure carried out by means of the printhead in the nonvisible printing area if the printhead is already located in this nonvisible printing area.

3. Apparatus (100) according to Claim 1 or 2,
wherein the control unit (110) is furthermore configured to move the printhead into a predetermined parking position during pausing of the printing procedure;
wherein the control unit (110) is preferably furthermore configured:
• to ascertain whether another printhead has a filament unwound from another filament spool available, and
• if it is ascertained that another printhead has a filament unwound from another filament spool available, to move the other printhead into the nonvisible printing area of the three-dimensional object during pausing of the printing procedure and to continue the printing procedure there.

4. Apparatus (100) according to any one of Claims 1 to 3,
wherein the control unit (110) is furthermore configured, if the filament information (107) indicates that the remaining filament is less than or equal to the predefined filament threshold value, to generate control data (310) in consideration of the printing data (304) in order to move the printhead, if the printhead is located in a visible printing area of the three-dimensional object, into a nonvisible printing area of the three-dimensional object and pause the printing procedure there to change the filament spool (102) during the printing of the three-dimensional object or, if the printhead is already located in a nonvisible printing area, to pause the printing procedure carried out by means of the printhead there.

5. Apparatus (100) according to any one of Claims 1 to 4,
• wherein the filament information (107) comprises a tensile stress and/or compressive stress of the remaining filament (104); and/or
• wherein the filament information (107) indicates that an end (109) of the remaining filament (104) has passed a detection apparatus; and/or
• wherein the filament information (107) indicates that an optical and/or mechanical marking of the remaining filament has passed a detection apparatus; and/or
• wherein the filament information (107) comprises a weight of the filament spool (102).

6. Apparatus (100) according to any one of Claims 1 to 5, wherein the control unit (110) is configured:
• to ascertain an amount of the remaining filament (104) on the basis of the filament information (107), and
• to ascertain that the remaining filament (104) is less than or equal to the predefined filament threshold value if the amount of the remaining filament (104) is less than or equal to a predefined amount threshold value.

7. Apparatus (100) according to any one of Claims 1 to 6, furthermore comprising:
one or more detection apparatuses (105), which are configured to detect the filament information (107) and provide it to the control unit (110),
wherein preferably at least one detection apparatus (105, 114, 116) of the one or more detection apparatuses (105, 114, 116) is configured to permanently detect a speed of the filament unwound from the filament spool (102) and provide it as filament information (107) to the control unit (110); and
wherein the control unit (110) is configured:
∘ to ascertain a distance covered by the filament unwound from the filament spool (102) using the detected speed, and
∘ to ascertain the remaining filament (104) on the basis of the ascertained distance covered by the filament unwound from the filament spool (102), wherein furthermore the control unit (110) is preferably configured:
- to ascertain, on the basis of the filament information (107) and on the basis of a currently detected speed value and/or an average speed value ascertained as the average of multiple speed values of the detected speed, an expected end time at which the remaining filament (104) will be completely consumed, and
- to ascertain a time for moving the printhead into the nonvisible printing area of the three-dimensional object such that this time is chronologically before the expected end time.

8. Apparatus (100) according to Claim 7,
wherein the one or more detection apparatuses (105, 114, 116) comprise:
• an incremental encoder for detecting a speed of the filament unwound from the filament spool (102); and/or
• a mechanical and/or optical detection apparatus for detecting an end (109) of the remaining filament (104); and/or
• a mechanical and/or optical detection apparatus for detecting an optical and/or mechanical marking of the remaining filament (104).

9. Apparatus (100) according to any one of Claims 1 to 8,
wherein the control unit (110) is configured to provide the generated control data (310) to a drive unit of the printhead and/or a drive unit of a printing bed, on which the three-dimensional object is being printed, in order to move the printhead into the nonvisible printing area of the three-dimensional object and pause the printing procedure there to change the filament spool (102) or, if the printhead is already in the nonvisible printing area, to pause the printing procedure carried out by means of the printhead there; wherein preferably the control data (310) provided to the drive unit of the printhead and/or the drive unit of the printing bed instruct it to move the printhead into a predefined parking position during pausing of the printing procedure.

10. Apparatus (100) according to any one of Claims 1 to 9, furthermore comprising:
a changing apparatus configured to exchange the filament spool (102) with another filament spool during pausing of the printing procedure.

11. System (400) for printing three-dimensional objects, comprising:
• an apparatus (100) according to any one of Claims 1 to 10; and
• the printhead (402) configured to print the three-dimensional object according to the printing data using the filament unwound from the filament spool (102).

12. System (400) according to Claim 11, furthermore comprising:
• a printing bed (404), wherein the printhead (402) is configured to print the three-dimensional object on the printing bed (404);
• a first drive unit (406), which is configured to move the printhead (402) at least in an x direction and a y direction; and
• a second drive unit (408), which is configured to move the printing bed (310) at least in a z direction;
• wherein the control unit (110) of the apparatus (100) is configured to control the first drive unit (406) and the second drive unit (408).

13. Method (600) for changing a filament spool during the printing of a three-dimensional object by means of the system of claim 12, the method comprising:
• printing the three-dimensional object according to printing data using a filament which is unwound from a filament spool (602);
• during the printing (602) of the three-dimensional object:
∘ detecting filament information which indicates whether a remaining filament is less than or equal to a predefined filament threshold value (604), wherein the predefined filament threshold value is selected such that, when the predefined filament threshold value is reached, sufficient remaining filament (104) is present to move a printhead actively into a nonvisible printing area of the three-dimensional object during the printing of the three-dimensional object, and
∘ if the filament information indicates that the remaining filament is less than or equal to the predefined filament threshold value, if the printhead is located in a visible printing area of the three-dimensional object, moving the printhead in consideration of the printing data into the nonvisible printing area of the three-dimensional object and pausing the printing procedure there during the printing of the three-dimensional object to change the filament spool.

14. Method (600) according to Claim 13, furthermore comprising:
during pausing of the printing procedure, moving the printhead into a predetermined parking position;
the method preferably furthermore comprising:
during the printing (602) of the three-dimensional object:
• ascertaining whether another printhead has a filament unwound from another filament spool available, and
• if the printhead is in the predetermined parking position and if it is ascertained that another printhead has a filament unwound from another filament spool available, moving the other printhead into the nonvisible printing area of the three-dimensional object and continuing the printing procedure using the other printhead.

## Revendications

1. Dispositif (100) pour changer une bobine de filament pendant l'impression d'un objet tridimensionnel, le dispositif (100) comprenant :
• une bobine de filament (102) sur laquelle est enroulé un filament (104) ;
• un dispositif d'entraînement (106), qui possède un moteur (108), lequel est conçu pour entraîner le filament (104) afin de dérouler le filament (104) de la bobine de filament (102) et le fournir à une tête d'impression en vue d'imprimer un objet tridimensionnel conformément à des données d'impression ; et
• un dispositif de commande (110), qui est conçu pour :
∘ recevoir des informations de filament (107), lesquelles indiquent si un filament restant est inférieur ou égal à une valeur de seuil de filament prédéfinie, la valeur de seuil de filament prédéfinie étant sélectionnée de telle sorte que, lorsque la valeur de seuil de filament prédéfinie est atteinte, il y a suffisamment de filament (104) restant pour déplacer activement la tête d'impression dans une zone d'impression non visible de l'objet tridimensionnel pendant l'impression de l'objet tridimensionnel, et
∘ lorsque les informations de filament (107) indiquent que le filament restant est inférieur ou égal à la valeur de seuil de filament prédéfinie, générer des données de commande (310) en tenant compte des données d'impression (304) afin de déplacer la tête d'impression dans la zone d'impression non visible de l'objet tridimensionnel pendant l'impression afin de changer la bobine de filament (102) et y suspendre le processus d'impression.

2. Dispositif (100) selon la revendication 1,
le dispositif de commande (110) étant en outre conçu pour, lorsque les informations de filament (107) indiquent que le filament restant est inférieur ou égal à la valeur de seuil de filament prédéfinie, générer des données de commande (310) en tenant compte des données d'impression (304) afin de suspendre le processus d'impression effectué au moyen de la tête d'impression dans la zone d'impression non visible, lorsque la tête d'impression se trouve déjà dans cette zone d'impression non visible.

3. Dispositif (100) selon la revendication 1 ou 2,
le dispositif de commande (110) étant en outre conçu pour déplacer la tête d'impression dans une position de repos prédéfinie lors de la suspension du processus d'impression ;
le dispositif de commande (110) étant en outre de préférence conçu pour :
• déterminer si un filament déroulé à partir d'une autre bobine de filament est disponible pour une autre tête d'impression, et
• s'il est déterminé qu'un filament déroulé à partir d'une autre bobine de filament est disponible pour une autre tête d'impression, lors de la suspension du processus d'impression, déplacer l'autre tête d'impression dans la zone d'impression non visible de l'objet tridimensionnel et y poursuivre le processus d'impression.

4. Dispositif (100) selon l'une des revendications 1 à 3,
le dispositif de commande (110) est en outre conçu pour, lorsque les informations de filament (107) indiquent que le filament restant est inférieur ou égal à la valeur de seuil de filament prédéfinie, générer des données de commande (310) en tenant compte des données d'impression (304) afin de déplacer la tête d'impression, lorsque la tête d'impression se trouve dans une zone d'impression visible de l'objet tridimensionnel, en vue de changer la bobine de filament (102) pendant l'impression de l'objet tridimensionnel en une région d'impression non visible de l'objet tridimensionnel et pour y suspendre le processus d'impression ou, lorsque la tête d'impression se trouve déjà dans une zone d'impression non visible, y suspendre le processus d'impression effectué au moyen de la tête d'impression.

5. Dispositif (100) selon l'une des revendications 1 à 4,
• les informations de filament (107) présentant une contrainte de traction et/ou une contrainte de compression du filament (104) restant ; et/ou
• les informations de filament (107) indiquant qu'une extrémité (109) du filament (104) restant a passé devant un dispositif de détection ; et/ou
• les informations sur le filament (107) indiquant qu'un marquage optique et/ou mécanique du filament restant a passé devant un dispositif de détection ; et/ou
• les informations de filament (107) présentant un poids de la bobine de filament (102).

6. Dispositif (100) selon l'une des revendications 1 à 5,
le dispositif de commande (110) étant conçu pour :
• déterminer une quantité du filament (104) restant à l'aide des informations de filament (107), et
• déterminer que le filament (104) restant est inférieur ou égal à la valeur de seuil de filament prédéfinie lorsque la quantité du filament (104) restant est inférieure ou égale à une valeur de seuil de quantité prédéfinie.

7. Dispositif (100) selon l'une des revendications 1 à 6, possédant en outre :
un ou plusieurs dispositifs de détection (105), qui sont conçus pour capturer les informations de filament (107) et les fournir au dispositif de commande (110), au moins un dispositif de détection (105, 114, 116) parmi l'un ou
les plusieurs dispositifs de détection (105, 114, 116) étant de préférence conçu pour détecter en permanence une vitesse du filament déroulé de la bobine de filament (102) et la fournir en tant qu'informations de filament (107) au dispositif de commande (110) ; et
le dispositif de commande (110) étant conçu pour :
∘ déterminer une distance parcourue par le filament déroulé à partir de la bobine de filament (102) en utilisant la vitesse détectée, et
∘ déterminer le filament (104) restant à l'aide de la distance parcourue déterminée du filament déroulé à partir de la bobine de filament (102),
le dispositif de commande (110) étant en outre de préférence conçu pour :
- déterminer, à l'aide des informations de filament (107) et à l'aide d'une valeur de vitesse actuellement détectée et/ou d'une valeur de vitesse moyenne déterminée comme moyenne d'une pluralité de valeurs de vitesse de la vitesse détectée, un instant final attendu auquel le filament (104) restant est entièrement consommé, et
- déterminer un instant pour le déplacement de la tête d'impression dans la zone d'impression non visible de l'objet tridimensionnel de telle sorte que cet instant se trouve temporellement avant l'instant de fin attendu.

8. Dispositif (100) selon la revendication 7,
l'un ou les plusieurs dispositifs de détection (105, 114, 116) possédant :
• un codeur incrémental destiné à détecter une vitesse du filament déroulé à partir de la bobine de filament (102) ; et/ou
• un dispositif de détection mécanique et/ou optique destiné à détecter une extrémité (109) du filament (104) restant ; et/ou
• un dispositif de détection mécanique et/ou optique destiné à détecter un marquage optique et/ou mécanique du filament (104) restant.

9. Dispositif (100) selon l'une des revendications 1 à 8,
le dispositif de commande (110) étant conçu pour fournir les données de commande (310) générées à une unité d'entraînement de la tête d'impression et/ou à une unité d'entraînement d'un lit d'impression sur lequel est imprimé l'objet tridimensionnel, afin de déplacer la tête d'impression en vue de changer la bobine de filament (102) dans la zone d'impression non visible de l'objet tridimensionnel et d'y suspendre le processus d'impression ou, lorsque la tête d'impression se trouve déjà dans la zone d'impression non visible, d'y suspendre le processus d'impression effectué au moyen de la tête d'impression ;
les données de commande (310) fournies à l'unité d'entraînement de la tête d'impression et/ou à l'unité d'entraînement du lit d'impression lui ordonnant de préférence de déplacer la tête d'impression dans une position de repos prédéfinie lorsque le processus d'impression est suspendu.

10. Dispositif (100) selon l'une des revendications 1 à 9, possédant en outre :
un dispositif de changement, qui est conçu pour remplacer la bobine de filament (102) par une autre bobine de filament lorsque le processus d'impression est suspendu.

11. Système (400) d'impression d'objets tridimensionnels, possédant :
• un dispositif (100) selon l'une des revendications 1 à 10 ; et
• la tête d'impression (402), qui est conçue pour imprimer l'objet tridimensionnel conformément aux données d'impression en utilisant le filament déroulé à partir de la bobine de filament (102).

12. Système (400) selon la revendication 11, possédant en outre :
• un lit d'impression (404), la tête d'impression (402) étant conçue pour imprimer l'objet tridimensionnel sur le lit d'impression (404) ;
• une première unité d'entraînement (406), qui est conçue pour déplacer la tête d'impression (402) au moins dans une direction x et une direction y ; et
• une deuxième unité d'entraînement (408), qui est conçue pour déplacer le lit de pression (310) au moins dans une direction z ;
• le dispositif de commande (110) du dispositif (100) étant conçu pour commander la première unité d'entraînement (406) et la deuxième unité d'entraînement (408).

13. Procédé (600) pour changer une bobine de filament pendant l'impression d'un objet tridimensionnel au moyen du système selon la revendication 12, le procédé comprenant :
• impression de l'objet tridimensionnel conformément aux données d'impression en utilisant un filament déroulé à partir d'une bobine de filament (602) ;
• pendant l'impression (602) de l'objet tridimensionnel :
∘ acquisition d'informations de filament, lesquelles indiquent si un filament restant est inférieur ou égal à une valeur de seuil de filament prédéfinie (604), la valeur de seuil de filament prédéfinie étant sélectionnée de telle sorte que, lorsque la valeur de seuil de filament prédéfinie est atteinte, il y a suffisamment de filament (104) restant pour déplacer activement une tête d'impression dans une zone d'impression non visible de l'objet tridimensionnel pendant l'impression de l'objet tridimensionnel, et
∘ lorsque les informations de filament indiquent que le filament restant est inférieur ou égal à la valeur de seuil de filament prédéfinie, lorsque la tête d'impression se trouve dans une zone d'impression visible de l'objet tridimensionnel, déplacement de la tête d'impression en tenant compte des données d'impression pendant l'impression de l'objet tridimensionnel en vue de changer la bobine de filament dans la zone d'impression non visible de l'objet tridimensionnel et suspension du processus d'impression à cet endroit.

14. Procédé (600) selon la revendication 13, comprenant en outre :
lors de la suspension du processus d'impression, déplacement de la tête d'impression dans une position de repos prédéfinie ;
le procédé comprenant de préférence en outre :
pendant l'impression (602) de l'objet tridimensionnel :
• détermination si un filament déroulé à partir d'une autre bobine de filament est disponible pour une autre tête d'impression, et
• lorsque la tête d'impression se trouve dans la position de repos prédéfinie et lorsqu'il est déterminé qu'un filament déroulé à partir d'une autre bobine de filament est disponible pour une autre tête d'impression, déplacement de l'autre tête d'impression dans la zone d'impression non visible de l'objet tridimensionnel et poursuite du processus d'impression avec l'autre tête d'impression.
